# EUROPÄISCHE PATENTSCHRIFT

(11) **EP 1 700 152 B1**
(45) Veröffentlichungstag und Bekanntmachung des Hinweises auf die Patenterteilung: **03.09.2008**
(21) Anmeldenummer: 04802925.0
(22) Anmeldetag: 13.12.2004
(51) Int. Cl.: G02B 26/08, E06B 3/67

(54) **MIKROSPIEGELARRAY**
MICROMIRROR ARRAY
RESEAU DE MICRO-MIROIRS

(30) Priorität: 15.12.2003 DE 10358967
(43) Veröffentlichungstag der Anmeldung: 13.09.2006
(73) Patentinhaber: Nanophotonic Solutions GbR, 34117 Kassel (DE)
(72) Erfinder: HILLMER, Hartmut, 34128 Kassel (DE); SCHMID, Jürgen, 34128 Kassel (DE); STADLER, Ingo, 34121 Kassel (DE)
(74) Vertreter: Reinhardt, Thomas Johannes
(86) Internationale Anmeldenummer: PCT/DE2004/002720
(87) Internationale Veröffentlichungsnummer: WO 2005/059621

(56) Entgegenhaltungen:
- DE-A1- 10 107 842
- DE-A1- 19 907 943
- US-A- 5 903 383
- US-A- 6 031 657
- US-A1- 2002 015 215
- US-A1- 2002 047 172
- US-B1- 6 632 373
- US-B1- 6 639 572

## Beschreibung

### STAND DER TECHNIK

Die vorliegende Erfindung betrifft Mikrostrukturtechnologien, insbesondere Mikrospiegelanordnungen und Mikrospiegelarrays.

Diese Mikrospiegelarrays sind gezielt gestaltete Anordnungen von miniaturisierten Spiegeln im Größenbereich weniger Quadratmikrometer. Sie werden vielfach als räumliche Lichtmodulatoren verwendet. Im einzelnen enthalten solche Mikrospiegelarrays, wie etwa offenbart in EP 0 877 272, eine Mehrzahl von mit einer gemeinsamen Grundträgerfläche verbundenen Einzelkörpern, wobei ein Einzelkörper wenigstens ein über der Grundträgerfläche erhaben stehendes Halteelement, quasi ein Halteblock für ein damit verbundenes optisch reflektiv wirkendes Element, also ein Spiegelelement enthält, wobei die Elemente der Einzelkörper Strukturelemente von Schichten eines Dünnschichtherstellungsprozesses sind, bei dem übliche Dünnschichtherstellungstechniken wie Aufdampfen, Galvanisieren, Sputtern und nass- oder trockenchemisches Ätzen von Schichtmaterial kombiniert mit lithographischen Techniken zur Anwendung kommen, um in diesen kleinräumigen Bereichen die gewünschten Strukturen gezielt formen zu können.

Bei einem solchen Mikrospiegelarray ist jedes einzelne Spiegelelement separat über eine entsprechende Addressierungsschaltungsanordnung elektrisch ansteuerbar, um ein Spiegelelement bewegen zu können von einer mechanisch stabilen "EIN" - Spiegelstellung in eine zweite "AUS"- Spiegelstellung. Um es bewegen zu können, muss das Spiegelelement auf eine entsprechend lokal begrenzt einwirkende magnetische, elektrostatische oder thermisch/mechanisch wirkende Kraft durch Bewegung reagieren zu können.

Diese Anordnungen finden Einsatz und Anwendung auf den Gebieten der optischen Informationsverarbeitung, der Projektionsanzeigen, der Video- und Grafikmonitore, des Fernsehens und des elektrofotografischen Drucks. Dabei dient der Mikrospiegelarray dazu, eine pixelgetreue Abbildung zwischen einer Bildwelle mit einer Vielzahl von Pixeln und einer Zielfläche, bspw. einem Display zu schaffen. Diese Pixelweise getrennt auf jedem Spiegel beruhende Abbildung erfordert ein extrem hohes Maß an Fertigungsgenauigkeit bei der Anfertigung solcher Mikrospiegelarrays. Desweiteren impliziert diese Art der Verwendung solcher Mikrospiegelarrays fast zwangsläufig, dass der entsprechende Elektronikschaltkreis, der die Logik für die "EIN/AUS Steuerung" und die entsprechende Einzeladdressierungslogik für die jeweiligen Spiegelelemente enthält, und damit solche Bauelemente insbesondere durch die Verwendung des relativ teuren, hochreinen Siliziums für die oben genannte Schaltung extrem teuer sind, zumal ihre Herstellung bezogen auf ihre geringe Fläche extrem viel Entwicklungszeit und Herstellungsaufwand erfordert.

Gemäß einer grundlegenden Leitidee der vorliegenden Erfindung wäre es nun wünschenswert, ähnlich geartete Mikrospiegelanordnungen, die eine Vielzahl von nebeneinander stehenden Mikrospiegeln aufweisen, für ganz andere Zwecke einzusetzen, nämlich sie als großflächige, planare Bauelemente in der Fassade von Gebäuden und insbesondere in Verglasungen von Gebäuden, wie bspw. in Fenstern einzusetzen, um eine variantenreiche Vielfalt von technischen Wirkungen bei der Umlenkung von Licht an den Spiegelflächen auszunutzen.

Es ist daher Aufgabe der vorliegenden Erfindung, eine Vorrichtung nach dem Oberbegriff des Anspruchs 1 zu schaffen, die ohne Aktuierbarkeit von einzelnen Spiegelelementen dazu geeignet ist, als Fassadenelement für Gebäude im Vergleich zu eingangs genannten räumlichen Lichtmodulatoren großflächig im Bereich von Quadratdezimetern und größer und mit geringen Kosten hergestellt werden zu können.

### VORTEILE DER ERFINDUNG

Der Gegenstand mit den Merkmalen des Anspruchs 1 löst diese Aufgabe.

In den Unteransprüchen finden sich vorteilhafte Weiterbildungen und Verbesserungen des jeweiligen Gegenstandes der Erfindung.

Die vorliegende Erfindung beruht auf der grundlegenden Erkenntnis, dass eine Mikrospiegelanordnung für die fassadenbaulichen Zwecke der vorliegenden Erfindung viel einfacher, mit weniger Entwicklungsaufwand und im Vergleich zu vorgenannten räumlichen Lichtmodulatoren im Wesentlichen ohne nennenswerte Anteile von teurem Siliziummaterial in der Schaltungstechnik hergestellt werden kann. Dazu wird vorgeschlagen, die gesamte Mikrospiegelanordnung als modulweise replizierbares, flächenhaftes, architektonisch verwendbares Bauelement herzustellen, bei dem die Steuerelektronik, die die Logik enthält, welche Spiegelelemente wie angesteuert werden sollen, zentral in einem dedizierten, entfernt (remote) gelegenen Steuergerät vorgesehen wird, von dem aus ein Addressierungsnetzwerk zur Ansteuerung der einzelnen Spiegelelemente oder Module ausgeht, das weitgehend in Form von gedruckten Leitungen in den flächenhaften Modulen bereits bei ihrer Herstellung integriert vorgesehen ist. Damit fällt die Notwendigkeit weg, in dem Fassadenelement selbst teure, siliziumbasierte Chiptechnologie zu implementieren. Desweiteren werden zur Herstellung der Mikrospiegelanordnungen selbst wesentlich billigere Materialien als hochreines Silizium verwendet. Daraus ergeben sich Herstellungskosten, die zumindest in derselben Größenordnung liegen wie andere, herkömmliche Fassadenelemente.

Dabei können die Materialen für die Grundträgerflächen, auf denen eine jeweilige Vielzahl von Einzelkörpern steht, und die Spiegelelemente tragen, durch Wahl bspw. von Glas, Plexiglas, Kunststoffen, insbesondere Polymeren, tatsächlich so gewählt werden, dass zumindest der Materialwert der Grundträgerfläche eines Moduls mit einer Kantenlänge bspw. von knapp 25 cm sehr niedrig liegt. Dabei ist klar, dass bei einer Verwendung solcher erfindungsgemäßer Vorrichtungen, insbesondere dann wenn sie flächenfüllend im Fensterbereich eingesetzt werden, die Grundplatte oder Grundträgerfolie, die die einzelnen Spiegelelemente trägt, aus einem Material sein sollte, das transparent für sichtbares Licht ist. Bei der Verwendung in der Fassade selbst ist dies nicht zwingend notwendig, da es im allgemeinen nicht erforderlich sein wird, durch das erfindungsgemäße flächenhafte Modul hindurch auf das Mauerwerk sehen zu können.

Als Material für die Halteelemente für die einzelnen Spiegelelemente empfiehlt sich grundsätzlich ein solches Material, das ein gewisse, langzeitstabile Formfestigkeit besitzt und gleichzeitig gut geeignet ist, um in einem Ätzprozess als Opferschicht zu dienen. Dabei kommen verschiedene Polymere wie z.B. thermotrope Hauptketten-Flüssigkristalline-Polymere und in besonderer Weise auch handelsüblicher Fotolack in Frage, der gleichmäßig aufgetragen werden kann, um eine einheitliche Schichtdicke zu bilden. Um eine hohe Festigkeit der Halteblöcke zu erreichen, können diese Stellen zuvor komplett aus dielektrischen Materialien z.B. aus geeigneten Silizium-Stickstoffverbindungen, etwa Si₃N₄, oder Siliziumoxide, besonders Siliziumdioxid (SiO₂) gefertigt werden.

Alternativ kann das Material für die Halteelemente so gewählt werden, dass es selektives Wachstum erlaubt, insbesondere durch Anwenden von Galvanik in tiefenlithographisch geformtem Polymethylmethacrylat (PMMA).

Als Material für die Spiegelelemente kommt eine reflektive Einfachmetallschicht oder bspw. eine dielektrische Mehrfachschicht in Frage, welche derart ausgestaltet ist, dass sie ein Reflektionsband im sichtbaren Spektralbereich aufweist (z.B. alternierende Si₃N₄ und SiO₂ λ/4-Schichten) mit einer reflektiven Einzelschicht oder eine reflektive Polymerschicht, z.B. Poly[p-Phenylen].

Dabei wird der Fachmann verstehen, dass bei der Niedrigpreisvariante mit fest vorgegebenen und nicht variablen Kippwinkeln der Spiegelelemente die Wahl des Kippwinkels von entscheidender Bedeutung für den jeweils zu erzielenden Zweck sein wird. Stehen beispielsweise die bei ebenen Spiegelelementen existierenden Flächennormalen der Spiegelelemente alle gleich und innerhalb oder parallel zur Fensterebene, so liegen die Spiegelelemente selbst im eingebauten Zustand im Fenster waagerecht. Daher würden sie sehr viel von oben kommendes Licht, egal ob diffuse oder direkte Strahlung nach oben zur Decke des Raumes umlenken. Man kann diesen Effekt vorteilhaft ausnutzen, um den Raum zusätzlich zu beleuchten und eventuell störende direkte Sonnenstrahlung zu reduzieren.

Insbesondere dann, wenn die erfindungsgemäße Mikrospiegelvorrichtung als flächig ausgebildetes Modul Verbindungselemente enthält, mit denen sie mit anderen Vorrichtungen der gleichen Art randseitig verbunden werden kann, ist ein einfacher modularer Aufbau und Ausbau zu großen Flächen möglich. Dafür kommen bspw. Rastungen, andere verriegelbare Steckverbindungen oder andere, im Stand der Technik bekannte Verbindungselemente wie etwa einrastende, in Frage.

Es sollte weiter vom Fachmann verstanden werden, dass die Wahl der Größe der Spiegelfläche sowie die der Spiegelform wohlüberlegt, und an den Verwendungszweck des fertigen Bauelementes (bzw. des Systems) angepasst sein sollte. Hierbei empfiehlt sich eine geometrische Form für die Spiegelflächen, die insbesondere dann, wenn die Spiegel entlang eines großen Winkelbereichs verstellbar sind, bestmöglichst flächenfüllend sein sollte, um beispielsweise einen möglichst großen Anteil der Strahlung komplett zurück- oder weiter in das Rauminnere reflektieren zu können, falls dies gewünscht ist.

Die Spiegelelemente können auch eine gekrümmte Form aufweisen, insbesondere dann, wenn sie ohne Einwirken äußerer Kräfte in dieser Form bleiben können. Damit können interessante, optische Effekte erzielt werden, insbesondere bei direkter Sonneneinstrahlung, da dann die Wirkung eines konvex oder konkav gewölbten Spiegels erzielt wird.

Wenn die Spiegelelemente in regelmäßiger Matrixform aus parallelen Zeilen und parallelen Spalten angeordnet sind, so ergibt sich eine übersichtliche Herstellungsweise, da die Strukturen für die Herstellung relativ einfach replizierbar sind, was insbesondere für alle solchen Ausführungsformen wichtig sind, bei denen elektrische Zuleitungen einzelner Spiegelelemente (siehe weiter unten) oder für zusammengefasste Gruppen von Spiegelelementen während des lithographischen Herstellungsprozesses eingebunden werden müssen.

In einer erfindungsgemäßen Ausführungsform mit beweglichen Spiegelelementen, bei der ein Spiegelelement als Strukturelement einer Einfachmetallschicht oder einer dielektrischen Mehrfachschicht mit leitfähiger Einzelschicht, oder einer leitfähigen Polymerschicht, bzw. Polymervielfachschicht, mit reflektierenden Eigenschaften ausgebildet ist, und wobei das Spiegelelement aufgrund einer vorgegebenen, relativ geringen Biegesteifigkeit seiner selbst oder der relativ geringen Biegesteifigkeit seiner Verbindungsbrücke(n) zum Halteelement relativ zur Grundträgerfläche beweglich für einen auf das Spiegelelement wirkenden Aktuationsmechanismus gestaltet ist, ergibt sich über die teilweise leitende Eigenschaft der Spiegelfläche ein Ansatzpunkt, das Spiegelelement über verschiedene Kräfte zu aktuieren, wie es an sich im Stand der Technik bekannt ist. Dabei kommen insbesondere eine elektrostatische Aktivierung, auf die weiter unten eingegangen wird, eine magnetische Aktivierung, eine piezoelektrische sowie eine thermische Aktivierung in Frage.

Soll der Aktuationsmechanismus für die Spiegelelemente - wie hier bevorzugt wird - auf elektrostatischen Kräften ruhen, so ist zweckmäßiger Weise eine erste Elektrode eine im Spiegelelement und eine zweite Elektrode der Grundträgerfläche zugeordnet. Dabei kann die zweite Elektrode optional auch für mehrere oder alle Spiegelelemente als flächenhaft ausgebildete Elektrode an der Grundträgerfläche und mit dieser fest verbunden vorhanden sein.

Bei diesem Ausführungsbeispiel ist eine elektrische Zuleitung und Kontaktierung der Elektroden von individuellen Einzelkörpern oder von Gruppen von Einzelkörpern bevorzugt vorzusehen, die zu einem der Außenränder der Vorrichtung führt, um von dort aus weitergeleitet werden zu können. Insbesondere sind die elektrischen Zuleitungen zur computergesteuerten Addressierung und Aktuierung der Einzelkörperbewegung und damit der Bewegung der Spiegelelemente über die Elektrodenpaare als planare Leitungen (integrierte Leiterbahnen) vorgesehen, was eine leichte Handhabung bei der Verlegung der Fassadenbauelemente gemäß der vorliegenden Erfindung sowie eine vereinfachte Pflege und geringere Anfälligkeit gegenüber Korrosion und anderen, schädlichen Umwelteinflüssen zur Folge hat.

In vorteilhafter Weise enthalten die oben genannten Verbindungselemente neben den mechanischen Kopplungsgliedern auch die entsprechenden elektrischen Steckverbindungen, damit durch einen einzigen Steckvorgang sowohl die mechanische als auch die elektrische Verbindung gewährleistet ist. Damit sind einfache elektrische Verbindungen zu einem Steuergerät möglich, das gemeinsam für eine Vielzahl zusammengesteckter, erfindungsgemäßer Einzelmodule zur Steuerung der Einzelspiegel oder kleinen Gruppen von Einzelspiegeln verwendet wird.

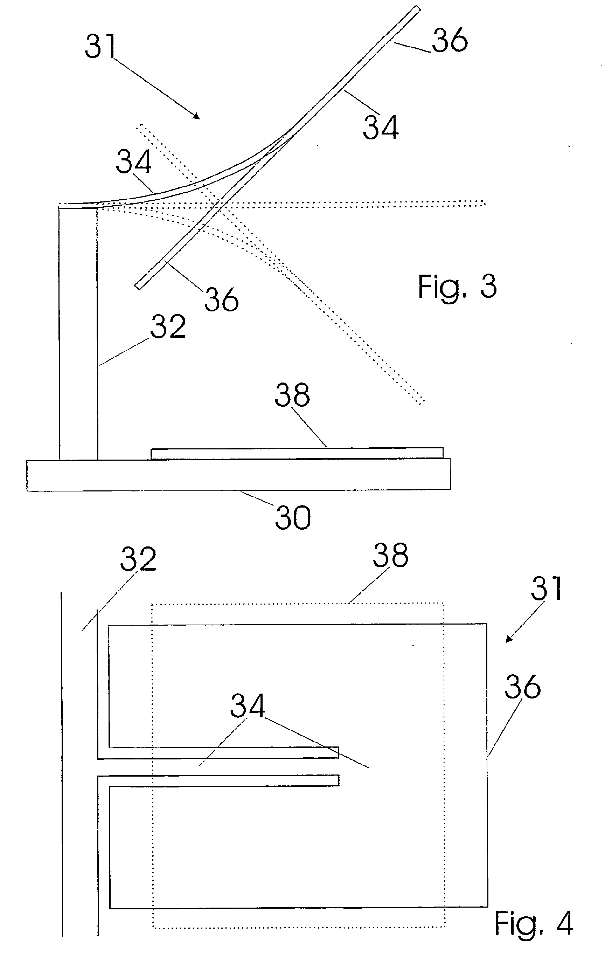

Wenn in weiter vorteilhafter Weise ein Spiegelelement über ein beispielsweise länglich geformtes Brückenelement vorgegebener Biegesteifigkeit mit dem Halteelement verbunden ist, dann ergibt sich eine einfache Dimensionierung und Auslegung der einzelnen Schichtdicken und Längen aufgrund der Abhängigkeit zwischen Kraftfeld und erzieltem Kippwinkel des Spiegelelements durch das einfache Hebelgesetz und die relativ einfache Biegemechanik eines an einem freien Ende eingespanntem "Balkens". Die komplexe Verformung der Verbindungsbrücke (engl. cantilever, Biegebalken) ist in Fig. 3 dargestellt. Die Bewegung der Spiegelebene, quasi eine Verkippung oder Schwenkbewegung der Spiegelebene kann dabei auf eine Achse bezogen werden, welche senkrecht zur Ausrichtung des Brückenelements liegt und gleichzeitig parallel zur Grundträgerfläche verläuft. Aus Gründen der besseren Verständlichkeit wird daher im folgenden eine Kipp- oder Schwenkbewegung angenommen, und auf die zugehörige Achse Bezug genommen. Diese Ausführungsform ist einfach zu fertigen, da das Brückenelement auch wieder ein Strukturelement einer Schicht sein kann. Es sind Kippwinkel ϑ je nach Vorkippung zwischen ca. -80° und + 30° möglich, bei etwa 30° Vorkippung, und wenn eine Aktuationsspannung das Spiegelelement bis auf 80° ziehen kann, wobei ϑ=0° dabei der Horizontalen im eingebauten Zustand entspricht.

Wenn in weiter vorteilhafter Weise das Spiegelelement an zwei länglich ausgebildeten Brückenelementen befestigt ist, die in im wesentlichen paralleler Richtung verlaufend eine Schwenkachse für den Bereich des Spiegelelements bilden und an entgegengesetzten Seiten des Spiegelelements ansetzen, und die Verwindungssteifigkeit der Brückenelemente um ihre Schwenkachse so an die elektrostatischen Kräfte zwischen den Elektroden angepasst ist, dass eine Schwenkbewegung des Einzelkörpers mit gezielt einstellbarem Auslenkwinkel relativ zur Grundträgerfläche durchführbar ist, dann ergibt sich bei entsprechender Ladung der Elektroden durch Anziehung oder Abstoßung eine Kippbewegung des Spiegelelements um die Schwenkachse, die senkrecht zur Schwenkachse des oben erwähnten Beispiels mit einem Brückenelement steht. Der Kippwinkel ϕ ist hier am einfachsten ohne Vorkippung zwischen ca. -80° und + 80° einstellbar möglich, wenn die Aktuationsspannung bei elektrostatischer Aktuation das Spiegelelement bis auf +/-80° ziehen kann. Der Winkel ϕ =0° entspricht dabei der Horizontalen. Damit sind sehr weite Bereiche des Kippwinkels möglich.

Der zentrale Vorteil der elektrostatischen Aktuierung liegt darin, dass bei guter elektrischer Isolierung nur geringe Halteströme benötigt werden.

Wenn in weiter bevorzugter Weise ein Spiegelelement kardanisch gelagert ist durch ein weiteres Brückenelementpaar, das innerhalb des nach dem vorstehenden Anspruch geschwenkten Bereichs vorgesehen ist, so ergibt sich die volle Funktionalität der Winkelanpassung. Die Winkel ϑ und ϕ sind fast unabhängig voneinander einstellbar. Damit ist der Spiegel selbst unabhängig oder abhängig vom Tagesgang des Sonnenstands sehr gut nachführbar, um für die verschiedenen Anwendungen die richtige Spiegelstellung zu bekommen. Dies setzt ein Steuerprogramm implementiert im Steuergerät voraus, das die entsprechende Nachführlogik und entsprechende Treiberprogramme für das zur Anwendung kommende Gesamtsystem besitzt. Dabei kann das Gesamtsystem beispielsweise aus einer Vielzahl von 2048 Einzelmodulen bestehen, die jeweils in 4 x 4, also 16er Gruppen aufgeteilt jeweils ein Gebäudefenster oder ein Fenster eines mobilen Systems mit einer Fläche von 1 qm bestücken, wobei insgesamt 128 Fenster im Gesamtsystem enthalten sind. Natürlich können dabei noch Sonnenstandssensoren eingesetzt werden, um Steuerinputs für die Nachführlogik zu realisieren. Dabei sollte klar sein, dass das Nachführziel individuell verschieden sein kann, je nach Verwendung und individuellem Bedarf.

Wenn, wie außerdem bevorzugt, das Spiegelelement so zur Schwenkachse orientiert ist, dass eine Schwenkachse das Spiegelelement außermittig teilt, so ist ein weiterer Parameter zum Optimieren des Kippwinkels gefunden, wobei beispielsweise die kurze Seite als Seite zur Anziehung oder Abstoßung an Elektroden verwendet werden kann. Ein kurzer Hebel bedeutet dann einen weiten Bereich der Kippbewegung, erfordert aber dementsprechend hohe Kraft.

### ZEICHNUNGEN

Ausführungsbeispiele der Erfindung sind in den Zeichnungen dargestellt und in der nachfolgenden Beschreibung näher erläutert.

Es zeigen:
Fig. 1 in einer schematischen Ansichtsdarstellung ein Gesamtsystem gemäß eines bevorzugten Ausführungsbeispiels der vorliegenden Erfindung enthaltend ein Panel passend für eine Fensterscheibe mit einer Vielzahl von erfindungsgemäßen Einzelmodulen und den zugehörigen Steuereinrichtungen;
Fig. 2 eine schematische Darstellung der randseitigen Kopplungsvorrichtungen zwischen zwei Einzelmodulen zwölf aus Fig. 1;
Fig. 3 eine schematische Querschnittsdarstellung eines Einzelkörpers mit Mikrospiegel, wie er vielfach wiederholt angeordnet auf einem Einzelmodul 12 in Fig.1 vorhanden ist, gemäß einem ersten Ausführungsbeispiel der vorliegenden Erfindung;
Fig. 4 eine schematische Draufsichtdarstellung des in Fig.3 dargestellten Einzelkörpers;
Fig. 5 eine schematische Querschnittsdarstellung eines Einzelkörpers, wie er vielfach wiederholt in einem Einzelmodul 12 aus Fig.1 vorkommt, in einer bevorzugten erfindungsgemäßen Variante, in der der Mikrospiegel an zwei Seiten aufgehängt ist;
Fig. 6 eine Draufsichtsdarstellung auf den Einzelkörper gemäß Fig. 5;
Fig. 7 in einer schematischen Draufsichtdarstellung weitere Einzelheiten für die relative Anordnung und Orientierung zwischen Mikrospiegel und Brückenelement gemäß Varianten a), b) und c) entsprechend dem Ausführungsbeispiel aus Fig. 5 und 6;
Fig. 8 in einer schematischen Draufsichtdarstellung einen Einzelkörper einer bevorzugten, weiteren Ausführungsform der vorliegenden Erfindung, bei der ein Mikrospiegel kardanisch gelagert ist;
Fig. 9A in einer skizzenhaften Darstellung eine Weiterbildung des kardanisch gelagerten Einzelkörpers nach Fig. 8 mit nicht-rechteckförmiger Form;
Fig. 9B eine schematische Ausschnittdarstellung einer flächenfüllenden Anordnung von unregelmäßig und verschieden geformten Mikrospiegeln als Teil eines Einzelmoduls 12 gemäß einem besonderen Aspekt der vorliegenden Erfindung;
Fig. 10 eine skizzenhafte, schematische Querschnittsdarstellung eines erfindungsgemäßen Panels aus Einzelmodulen, eingebaut in ein Fenster, in vereinfachter Darstellung.

### BESCHREIBUNG DER AUSFÜHRUNGSBEISPIELE

In den Figuren bezeichnen gleiche Bezugszeichen gleiche oder funktionsgleiche Komponenten.

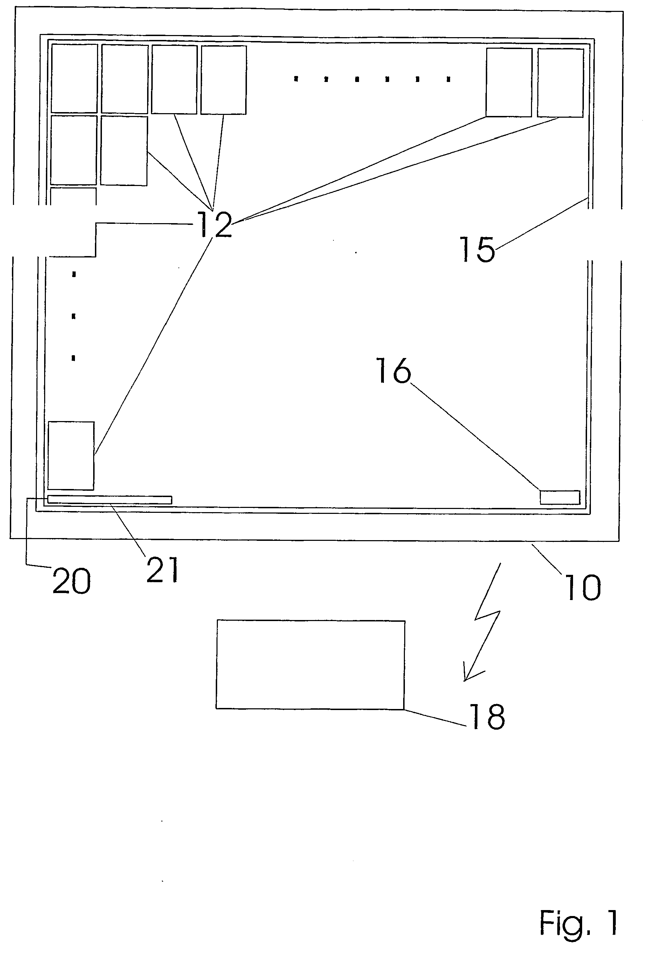

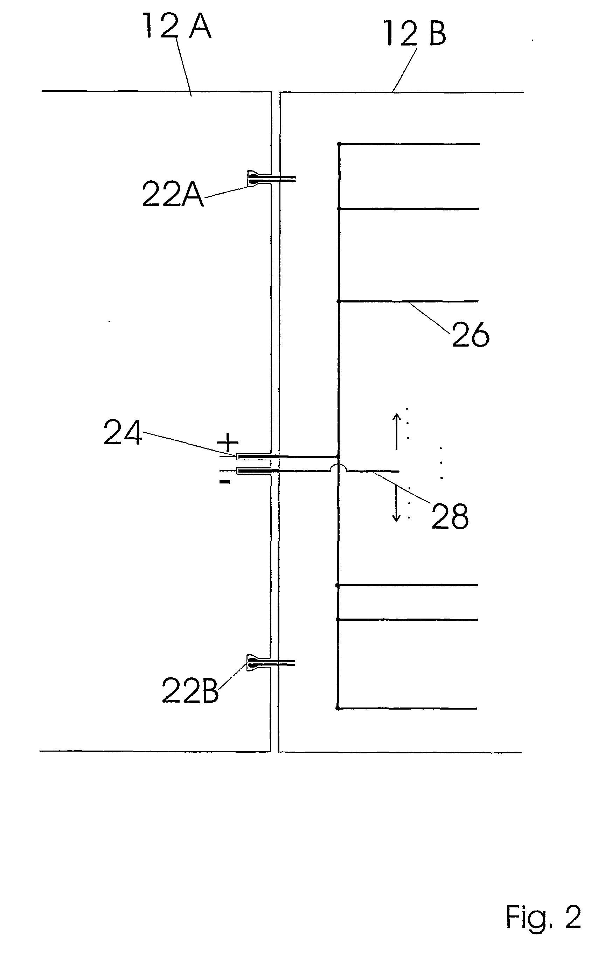

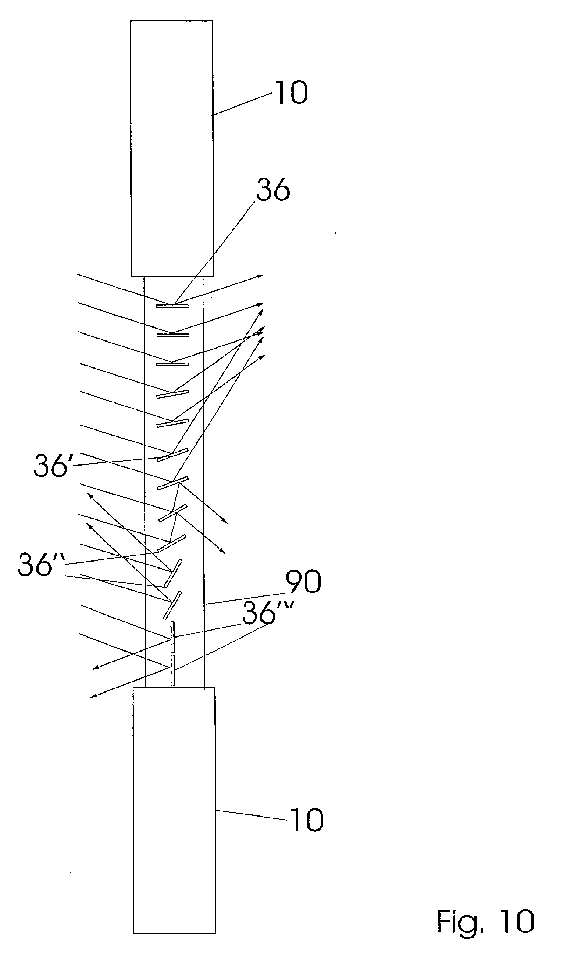

Mit Bezug zu **Fig.1** und ergänzendem Bezug zu **Fig. 10** (Querschnitt) ist eine erfindungsgemäßes Panel 15 enthaltend einer Vielzahl von matrixartig angeordneten (arrayförmigen) Einzelmodulen 12, wobei die Außenmaße des Panels 15 etwa den Maßen des sichtbaren Bereichs einer Fensterfläche entsprechen, die innerhalb eines Fensterrahmens 10 angeordnet ist. Wie Fig.10 zusätzlich zeigt, ist das Panel 15 im Inneren zwischen einer äußeren Glasscheibe 90 und einer inneren Glasscheibe 92 angeordnet. Die Einzelmodule 12 enthalten ihrerseits wieder eine Vielzahl von optisch reflektiv wirkenden Mikrospiegeln, die ebenfalls matrixartig in regelmäßigen Zeilen und Spalten auf einer gemeinsamen Trägerfläche angeordnet sind, was allerdings in Fig.1 aus Gründen erhöhter Klarheit nicht dargestellt ist. Wie aus Fig.1 ebenfalls ersichtlich sind die Einzelmodule 12 von identischer Form und miteinander verbunden, wobei nähere Details in **Fig.2** dargestellt sind.

Ein Ansteuerungsnetzwerk bestehend im wesentlichen aus planaren Leitungen im Inneren eines jeden Einzelmoduls 12 und Kontaktierungen zwischen den Einzelmodulen ist vorgesehen, um die oben erwähnten Einzelkörper mit ihren Mikrospiegeln erfindungsgemäß durch eine entsprechende elektrische Aktuierung auf Grund elektrostatischer Kräfte gezielt zu bewegen, um damit gezielt Licht umlenken zu können. Zu diesem Zweck ist eine Versorgungsleitung 20 vorgesehen, die eine Gleichspannung vom beispielsweise der Größenordnung von 60V über einen dafür vorgesehenen Anschluss 21 an ein speziell dafür eingerichtetes Einzelmodul 12 liefert.

Des weiteren ist ein Sensor 16 vorgesehen, der ebenfalls mit dem Aktuierungsnetzwerk operativ verbunden ist und dafür eingerichtet ist, Steuersignale von einem Steuergerät 18 drahtlos oder - falls drahtgebunden, dann vorteilhaft in einer Kapselung mit einem Anschluß zur Stromversorgung des Panels - zu empfangen, um damit einzelne Einzelmodule 12 oder Gruppen von Mikrospiegeln gezielt elektrostatisch zu aktuieren. Bei dem Sensor kann es sich beispielsweise um einen Infrarot (IR) oder einen Ultraschall - oder einen Funksensor handeln. Das Steuergerät 18 enthält die notwendige Hardware, um ein Programm ablaufen zu lassen, das sämtliche Algorithmen beinhaltet, die notwenig sind, um die Spiegel gemäß einer programmierten Bewegung zu bewegen. Diese Algorithmen sind hinlänglich aus dem Stand der Technik bekannt.

Auch die entsprechenden Treiberprogramme zur Umsetzung einer speziellen Ansteuerungsgeometrie und eines zugehörigen speziellen Ansteuerungsnetzwerks sind einfach herzustellen und im Steuergerät 18 enthalten.

Mit weiterem Bezug zu Fig.2 wird die Kopplung zwischen Einzelmodulen 12 aus Fig.1 näher beschrieben.

Zwei Einzelmodule 12 A und 12 B mit quadratischer Kontur liegen kanten- und eckenbündig auf Stoß angeordnet mit ihren jeweiligen Kantenseiten aneinander an. In vorteilhafter Weise ist eine Einrastverbindung 22a und weitere Einrastverbindung 22 b jeweils außermittig vorgesehen, um die beiden Einzelmodule 12 A und 12 B an zwei Stellen miteinander mechanisch zu verbinden. Des weiteren ist ein elektrischer Kontakt 24 vorgesehen, der die elektrische Verbindung zwischen den Ansteuerungsnetzwerken der beiden Einzelmodule herstellt. In Fig. 2 sind nur zwei Einzelleitungen dargestellt, (+ und -) es können natürlich auch mehrere solcher elektrischer Kontakte realisiert sein, wenn sich dies aus schaltungstechnischen oder herstellungstechnischen Gründen anbietet, z.B deshalb, weil sich weniger Kreuzungspunkte zwischen sich überquerenden Leitungen ergeben sollten. Um die Komplexität des Ansteuerungsnetzwerks und die sich dabei ergebenden komplexen Randbedingungen des Herstellungsverfahrens für die Implementierung dieser Leitungen als planare Schaltung während eines Dünnschicht-Herstellungsprozesses zu begrenzen, wird vorgeschlagen, ganze Gruppen von Einzelkörpern gemeinsam anzusteuern, so dass bei identischer Fertigung der Einzelkörper eine für alle in etwa gleich starke Schwenkbewegung der Mikrospiegel erfolgt. Als Untergruppen bieten sich beispielsweise eine oder mehrere Zeilen von Einzelkörpern eines Einzelmoduls 12 an. Ebenso können einzelne oder mehrere Spalten gemeinsam mit dem selben Steuersignal angesteuert werden.

Die Schaltung innerhalb einer Zeile kann beispielsweise aus einer Serienschaltung einer kompletten Zeile oder gezielt gewählten Unterabschnitten einer Zeile bestehen, je nachdem, wie groß der Spannungsabfall während der Aktivierung eines einzelnen Einzelkörpers ist. Um im bevorzugten Niederspannungsbereich bleiben zu können, kann es sich daher empfehlen, in einer einzigen Zeile eine Parallelschaltung von Serienschaltungen für die oben genannten Untergruppen zu realisieren.

Mit weiterem Bezug zu **Fig. 3** und **Fig. 4** wird im Folgenden der strukturelle Aufbau eines Einzelkörpers beschrieben, der einen Mikrospiegel trägt. Der gesamte Einzelkörper ist mit Bezugszeichen 31 gekennzeichnet. Auf einer Grundträgerfläche 30, die weiter oben bereits erwähnt wurde, ist ein Halteelement 32 geeigneten Querschnitts und mit geeigneter Höhe im Verhältnis zur Schwenkbewegung des Mikrospiegels 36 vorgesehen. An dem der Grundträgerfläche entgegengesetzten Endabschnitt des Halteelements 32 ist ein Brückenelement 34 befestigt, das längliche Gestalt besitzt und den Mikrospiegel 36 trägt. Das Brückenelement 34 besitzt einen Endabschnitt, mit dem es am Halteelement 32 befestigt ist und einen frei, in der Luft schwebenden Endabschnitt, damit es durch eine Kraft, die in Fig.3 nach oben und unten gerichtet ist, mit seinem freien Ende biegeelastisch aus einer Ruhelage, die in Fig. 3 horizontal dargestellt ist, ausgelenkt werden kann. Dabei stellt günstigerweise das Brückenelement 34 zumindest mit einem Teilbereich die eine Elektrode dar, und die Gegenelektrode 38 ist der Grundträgerfläche 30 zugeordnet und mit dieser durch einen entsprechenden Dünnschichtprozess fest verbunden.

Wie Fig.4 zeigt, ist das Brückenelement länglich geformt und besitzt, siehe auch Fig.3, eine relativ dünne Stärke, damit eine jeweilige für die Aktuierungsspannungen geeignete Biegeelastizität des Brückenelements 34 realisiert werden kann. Der Mikrospiegel 36 ist eine eigene Schicht und besitzt eine Form, mit der er vorzugsweise in der in Fig. 3 gezeigten Weise nach oben und unten bewegt werden kann, ohne mit dem Brückenelement selbst oder mit der Gegenelektrode zu kollidieren. Daher hat er vorzugsweise eine Aussparung um einen Teilabschnitt des Brückenelements 34 herum, der dem Halteelement zugeordnet ist.

Die Querschnittsform des Halteelements 32 kann in einem weitem Bereich variiert werden, so lange die erforderliche Festigkeit gegeben ist, um eine präzise Mikrospiegelbewegung durchführen zu können. Die Kantenmaße ax und ay des Mikrospiegels 36 können in einem weitem Bereich variiert werden, wobei dann die Höhe und Festigkeit des Halteelements 32 passend dazu eingerichtet werden muss, damit sich eine störungsfreie Bewegung der Mikrospiegel 36 ergibt. Dabei können die Kantenlängen der Mikrospiegel vorzugsweise in einem weiten Bereich zwischen wenigen Mikrometern und einigen Millimetern variieren, beispielsweise zwischen 5 Mikrometern und 5 Millimetern. Die Dimensionierung der Mikrospiegel 36 sollte auch vom späteren Verwendungszweck der Einzelmodule 12 bzw. der Panels 15 abhängig gemacht werden. Umso höher die mechanische Beanspruchung erwartet wird, desto kleiner sollten die Spiegel dimensioniert werden, damit sie eine möglichst geringe Reaktion auf üblicherweise relativ niederfrequente störende Schwingungen aufweisen und unempfindlich gegenüber starken Erschütterungen werden, d.h. eine sehr hohe mechanische Stabilität aufweisen.

Die Kontaktierung zwischen dem als Elektrode ausgebildeten Brückenelement 34 und dem zugehörigen Teil des Anschlussnetzwerks kann bevorzugt über das Halteelement 32 erfolgen, wenn das Anschlussnetzwerk, wie hier bevorzugt im unteren Bereich von Fig.3 angeordnet ist, beispielsweise kurz oberhalb der Grundträgerfläche wobei es zweckmäßiger Weise von dieser elektrisch isoliert ist. Wenn das Brückenelement 34 aus einem Metall besteht oder zumindest einen Metallüberzug besitzt, der gleichzeitig elektrisch gut leitend und gute reflektive Eigenschaften besitzt, dann kann die Kontaktierung zwischen Brückenelementen und Anschlussnetzwerk beispielsweise über ein durchgehendes Loch (Via) durch das Halteelement 32 hindurch, oder alternativ kann es auch randseitig an diesem in Fig. 3 von oben nach unten gesehen, verlaufen. Die Gegenelektrode 38 besteht ebenfalls aus leitfähigem Material und ist je nach Ausführung des Materials der Grundträgerfläche 30 ggf. noch durch eine Isolierschicht von dieser getrennt, was in Fig.3 zum Zwecke erhöhter Klarheit nicht dargestellt ist.

Wenn die Netzwerke für Elektrode und Gegenelektrode entsprechend mit Spannung versorgt werden, so dass zwischen den Elektroden eine anstoßende oder eine abstoßende Kraft entsteht, bewegen sich die Spiegel wie es in Fig. 3 angedeutet ist, gemäß den Gesetzen der Elektrostatik und den Kräften in einem elektrischen Feld.

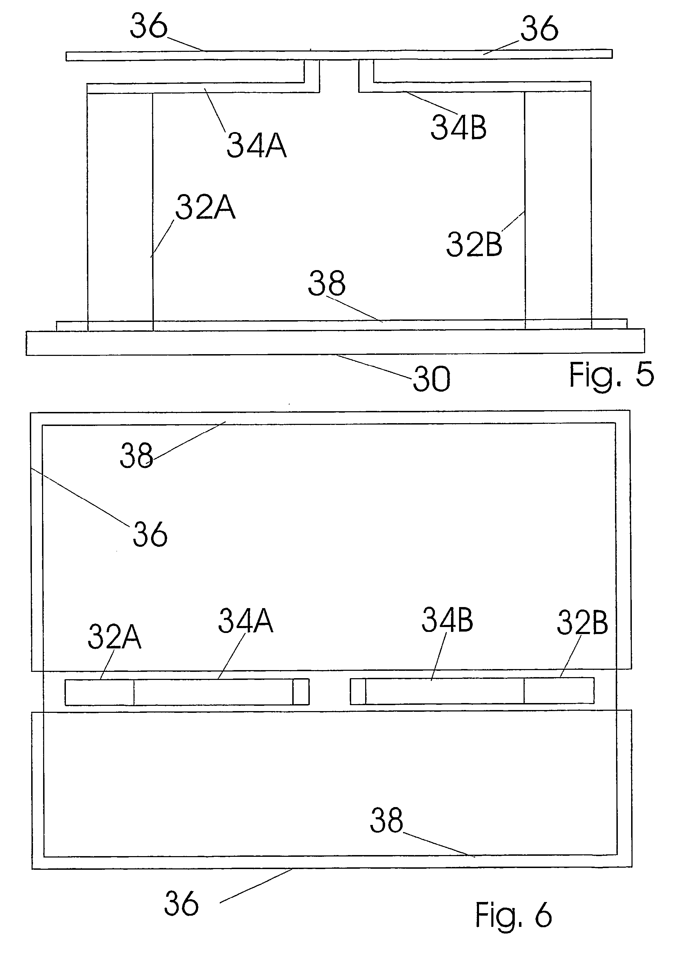

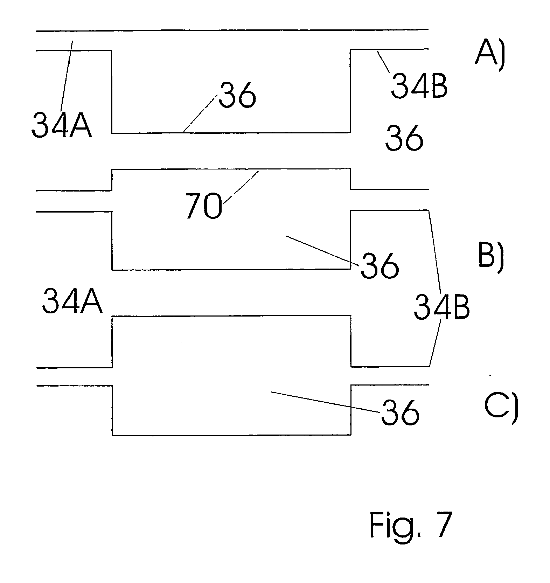

Mit weiterem Bezug zu **Fig. 5 und 6** wird im Folgenden ein weiteres bevorzugtes Ausführungsbeispiel für die Ausgestaltung eines erfindungsgemäßen Einzelkörpers näher beschrieben. In diesem Ausführungsbeispiel ist der Mikrospiegel 36 an zwei Brückenelementen 34 A und 34 B befestigt, wobei die Brückenelemente ihrerseits auf je einem eigenen Halteelement 32 A bzw. 32 B befestigt sind. Wie Fig.6 genauer zeigt, handelt es sich um eine asymmetrische Anordnung, wie sie in Fig. 7 b) als Variante gezeigt ist.

In diesem Ausführungsbeispiel ergibt sich eine Schwenkbewegung des Mikrospiegels 36 um eine in der Zeichenebene von Fig.5 liegende Achse, da die Brückenelemente 34 A und 34 B als leicht verwindungsfähige mechanische Elemente gefertigt werden, die ebenso wie im vorangegangenen Ausführungsbeispiel über Elektroden aktiviert werden. In diesem Fall wird der Mikrospiegel 36 zweckmäßiger Weise als Elektrode benutzt, und es sind zwei Gegenelektronen 38 A und 38 B vorgesehen, die auf gegenüberliegenden Seiten der Schwenkachse, siehe Fig.6 auf der Grundträgerfläche angeordnet sind. Auch in diesem Ausführungsbeispiel kann der Mikrospiegel 36 über Via durch die Halteblöcke 32 A und 32 B kontaktiert werden. Es kann auch nur ein Elektrodenpaar vorgesehen sein.

Weiter sollte zu den vorstehend gezeigten Ausführungsvarianten angemerkt werden, dass ein und derselbe Halteblock 32 bzw. 32 A oder 32 B nicht nur für ein Brückenelement 34, oder 34 A oder 34 B dienen kann, sondern gleich für das nächste Brückenelement mit verwendet werden kann. Zu diesem Zweck erstreckt sich zweckmäßigerweise ein Brückenelement nach der einen Seite und ein Brückenelement nach der entgegengesetzten Seite des Halteelements.

Mit weiterem Bezug zu **Fig. 7** werden im Folgenden Ausführungsvarianten für die oben genannten Ausführungsbeispiele beschrieben.

Fig. 7 zeigt in einer schematischen Draufsichtdarstellung weitere Einzelheiten für die relative Anordnung und Orientierung zwischen Mikrospiegel und Brückenelement gemäß Varianten a), b) und c) entsprechend dem Ausführungsbeispiel aus Fig. 5 und 6;

In Fig. 7a) ist der Mikrospiegel 36 randseitig mit den Brückenelementen 34 A und 34 B verbunden. Bei dieser Ausführungsform kann nur ein einziges Elektrodenpaar auf einer Seite der Schwenkachse benutzt werden, um die Spiegelbewegung durchzuführen. Dieses Elektrodenpaar wäre dann vorteilhaft in einem gezielt vorgewählten Abstand von der Schwenkachse angeordnet, und zwar sowohl bei der Elektrode am Mikrospiegel als auch bei der Elektrode am Grundträger 30.

Bei den in Fig. **7** **B und 7 C** gezeigten Varianten können prinzipiell auf beiden Seiten der Schwenkachse, die durch die Brückenelemente 34 A und B gegeben ist, Elektrodenpärchen angebracht werden. Die in Fig. 7 B gezeigte Variante enthält dabei die breitesten Variationsmöglichkeiten, um eine möglichst umfangreiche Schwenkbewegung des Mikrospiegels 36 zu ermöglichen. Denn wenn die Aktuationsspannung groß genug gewählt werden kann, um an dem kurzen Ende 70 wirken zu können, so kann ein großer Winkelbereich realisiert werden, ohne dass die Gefahr besteht, dass sich der Mikrospiegel in seiner extremen Auslenkung und die Gegenlektrode berühren, für den Fall der Anziehung zwischen beiden Elementen.

In Fig. 7 C ist der Vollständigkeit halber noch einmal der Fall der symmetrischen Aufteilung der Spiegelhälften gezeigt.

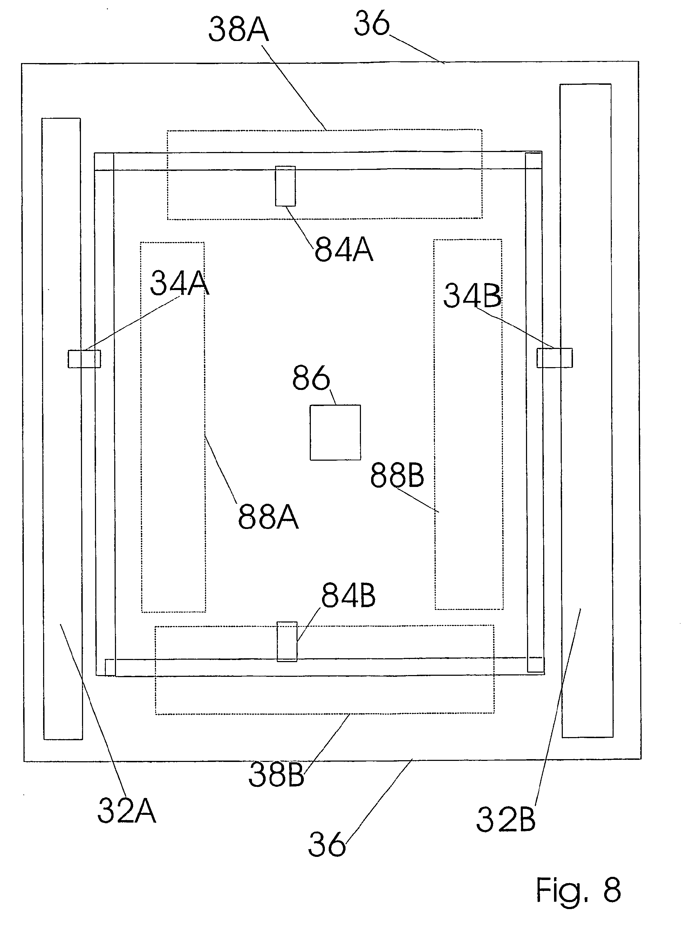

Mit weiterem Bezug zu **Fig. 8** wird ein weiteres, bevorzugtes Ausführungsbeispiel der vorliegenden Erfindung beschrieben, dass sich dadurch auszeichnet, dass ein Mikrospiegelelement nach Art einer Kardanischen Lagerung bzgl. zweier voneinander im wesentlichen unabhängiger Schwenkachsen gelagert ist.

Fig. 8 zeigt in einer schematischen Draufsichtdarstellung auf einen Einzelkörper eine bevorzugte, weitere Ausführungsform der vorliegenden Erfindung, bei der ein Mikrospiegel kardanisch gelagert ist. Die Halteelemente 32 A bzw. 32 B sind in Fig. 8 dem linken bzw. rechten Rand der Darstellung zugeordnet. Von diesen Halteelementen führen die Brückenelemente 34 A und 34 B, vgl. Fig. 5 und Fig. 6 eine gemeinsame Schwenkachse bildend jeweils nach innen und treffen dort auf einen Schwenkrahmen 80. Dieser ist als Elektrode ausgebildet und kann mit einer bzw. zwei Gegenelektroden 38 A bzw. 38 B wechselwirken, vgl. die Beschreibung Fig. 5 und Fig. 6. Damit ergibt sich eine Schwenkbewegung des Schwenkrahmens 80 um die gemeinsame Schwenkachse von 34 A und 34 B. Es ist nun innerhalb des Schwenkrahmens 80 eine weitere Schwenklagerung vorgesehen, nämlich um eine Schwenkachse, die gebildet ist von einem inneren Brückenelement 84 A und einem anderen inneren Brückenelement 84 B, die jeweils den Schwenkrahmen 80 mit dem Mikrospiegel 36 oder dessen festes Auflager 86 verbinden.

Weiter ist wenigstens eine Aktuierungselektrode 88 A oder, um die volle Winkelfunktionalität in einem möglichst weiten Bereich zu gewährleisten, auch wieder eine zweite Aktuierungselektrode 88 B vorgesehen, um den Mikrospiegel um die vorgenannte zweite Schwenkachse (um 84 A, 84 B Achsen herum) bewegen zu können. Fig. 8 sollte im wesentlichen in ihrer Einfachheit der Konstruktion nur als beispielhaft für eine kardanische Lagerung verstanden werden. Natürlich können auch andere als rechteckige Formen der Schwenkrahmen oder Mikrospiegel realisiert werden.

Um die Gesamtfläche besser mit Spiegelfläche von Mikrospiegeln füllen zu können, kann die in Fig. 8 gezeigte innere Fläche auch nur als Auflager dienen, um den Mikrospiegel 36 in Z-Ebene aus der Papierebenen heraus gehoben tragen zu können. Dies hat den Vorteil, dass die Spiegelfläche weit größer sein kann und schränkt bei richtiger Dimensionierung des turmartigen Auflagers 86 die Beweglichkeit des Mikrospiegels 36 kaum ein.

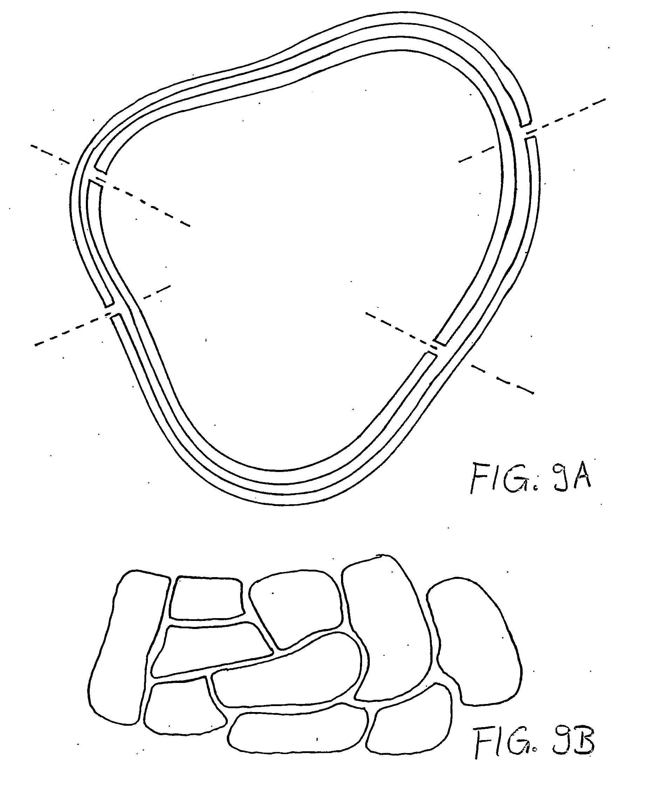

Mit weiterem Bezug zu **Fig. 9A und 9B** wird eine Variante der besonders bevorzugten Ausführungsform nach Fig. 8 näher gezeigt und beschrieben, bei der sich die beiden Schwenkachsen nicht rechtwinklig gegenüberstehen. Des weiteren ist die Spiegelform ebenfalls nicht rechteckig, sondern besitzt eine eckenlose Außenkontur, die in der Fig. 9 beispielhaft willkürlich, hier etwa birnenförmig dargestellt ist, um zu zeigen, dass hierbei nahezu beliebige Formenschätze gewählt werden können. Dabei ändert sich an dem eigentlichen strukturellem Aufbau der Mikrospiegellagerung nur insoweit etwas, wie es erforderlich ist, um die geänderte Geometrie dieses unregelmäßigen Aufbaus konstruktiv abzubilden. Beispielsweise sind die Orte der Elektroden entsprechend angepasst, die Abstände der Halteelemente voneinander, etc.. Insoweit kann die Beschreibung des Aufbaus des Einzelkörpers mit dem rechteckig ausgebildeten, kardanisch gelagerten Mikrospiegel für die weiteren Details herangezogen werden.

Insbesondere dann, wenn die Fläche eines Mikrospiegelelements eher größer gewählt ist, etwa im Bereich von 20 mm², dann nimmt der Betrachter bewusst gewählte unregelmäßige Formen für die Spiegelelemente mit den bloßen Augen in einem gewissen Abstand von wenigen Metern oder darunter überhaupt erst wahr. Daher kann es ästhetisch vorteilhaft sein, die Gesamtfläche, wie sie etwa in Fig. 1 am Beispiel der Fensterfläche gezeigt ist, mit einer einigermaßen flächenfüllenden Anordnung von vielen, unregelmäßig zugeschnitten Spiegelelementen 36 zu füllen, was in Fig. 9B angedeutet ist. Dabei ist insbesondere dann, wenn die Flächenfüllung zu einem großen Prozentsatz erfolgen soll, darauf zu achten, dass sich die Konturen von benachbarten Spiegelelementen möglichst eng aneinander schmiegen, d.h. dass die verbleibenden Lücken zwischen den Außenkonturen möglichst klein sind.

Aus dem in Fig. 8 gezeigten Beispiel der kardanischen Lagerung mit dem inneren Auflager 86 und der dort erwähnten Möglichkeit, das Spiegelelement aus der Ebene des Schwenkrahmens 80 herauszuheben, ergibt sich die Möglichkeit, die Größe des Spiegels im wesentlichen unabhängig von der Größe seines Unterbaus, der für seine Schwenklagerung zuständig ist, zu dimensionieren. Wird der Abstand zwischen Unterseite Spiegelelement und Oberseite Schwenkrahmen 80 groß genug gewählt, so ergeben sich allein durch einfache geometrische Überlegungen die maximal möglichen Schwenkwinkel, bis der Mikrospiegel an einem Bereich des Schwenkrahmens oder der außenstehenden Halteelemente 32 anschlägt.

Mit weiterem Bezug zu **Fig. 10** und ergänzendem Bezug zu Fig. 1 soll ein grundlegender Aspekt für die Verwendung des erfinderischen Produkts erläutert werden. Fig. 10 zeigt eine skizzenhafte, schematische Querschnittsdarstellung eines ein erfindungsgemäßen Panels aus Einzelmodulen 12, eingebaut in ein Fenster, in vereinfachter Darstellung.

In Fig. 10 ist zum Zwecke der erhöhten Klarheit die Vereinfachung vorgenommen worden, die Mikrospiegel 36 nicht in ihrer wahren Größe, sondern deutlich vergrößert zu illustrieren, um den Strahlengang und das Prinzip der Umlenkung des von außen (von links) in der Zeichnung einfallenden Lichtes zu verdeutlichen.

In der Schnittdarstellung von Fig. 10 begrenzt ein oberer bzw. ein unterer Endabschnitt 10 eines Fensterrahmens die verglaste Fläche des Fensters, wie es in Fig. 1 auch dargestellt ist. Die Außenscheibe 90 und die Innenscheibe 92 dieses Doppelfensters sind nur schematisch als Linie dargestellt, und die Mikrospiegel 36, 36', 36", 36"' , aus demselben Einzelmodul 12 oder aus verschiedenen Einzelmodulen 12, siehe zurück zu Fig. 1, sind untereinander in teilweise verschiedenen Winkeln relativ zur einfallenden Strahlung dargestellt. Dabei ist die Darstellung nur schematisch zu verstehen, denn es ist für einen Strahl nur ein einziger Mikrospiegel stark vergrößert dargestellt.

Die Mikrospiegel im oberen Bereich reflektieren das schräg von oben einfallende Licht in das Rauminnere und zwar an dessen Decke, die nicht dargestellt ist. Dies erfolgt gezielt durch Einstellung des Winkels ϑ, der den Winkel zwischen Vertikalebene und der einfallenden Strahlung kennzeichnet.

In einem tieferliegenden Bereich, beispielsweise auf eine Höhe von etwa 1,40 m bis 1,80 m über dem Boden können nun die Mikrospiegel 36' und 36" so eingestellt sein, dass sie das von außen eintreffende Sonnenlicht wieder nach außen zurückreflektieren, um Blendungen von Personen zu vermeiden, aber Streulicht durchzulassen. Dies erfolgt, wie man aus der Fig. 10 leicht erkennt, durch eine Kippung eines Mikrospiegels um etwa 70 Grad.
Dabei wird als stromlos / spannungsfrei realisierbare Ruhelage für die Mikrospiegel bevorzugt deren Vertikalausrichtung realisiert, also sich erstreckend von unten nach oben in Fig. 10, wobei spannungsfrei hier als "ohne elektrische Vorspannung verstanden wird.

In einem weiter unten liegenden Bereich, beispielsweise unterhalb von 1,20 m über dem Boden können die Mikrospiegel 36 --- wiederum anders eingestellt sein, nämlich senkrecht ausgerichtet, so dass man nicht von außen in das Fenster hineinsehen kann. Nebenbei hat es auch die Folge, dass ebenfalls die Sonnenstrahlung nach außen zurückreflektiert wird. Diese gegebenenfalls vorteilhaften Wirkungen zur zusätzlichen Beleuchtung eines Raumes durch Umlenken des einfallenden Lichtes vorzugsweise an die Raumdecke, Wärmeschutz bzw. Sichtschutz kann zumindest beim Sichtschutz und beim Hitzeschutz in zufriedenstellender Weise von Einzelmodulen 12 (Fig. 1) erreicht werden, von denen die jeweiligen Mikrospiegel 36 jeweils nur um eine einzige Achse schwenkbar gelagert sind, nämlich um die horizontale Achse, die in der Fensterebene liegt. Aus Sicht des im Raum stehenden, und nach draußen durch das Fenster sehenden Beobachters ergibt diese horizontale Schwenkachse einen "Auf/Ab" -Freiheitsgrad für die Lichtumlenkung.
Dieser Freiheitsgrad ist im Zusammenhang mit der vorliegenden Erfindung mit dem Winkel ϑ gekennzeichnet.

Wie aus Fig. 10 leicht gedanklich weiter entwickelt werden kann, ergibt sich der zweite Freiheitsgrad durch die oben erwähnte zweite Schwenkachse des Spiegels, nämlich eine jeweilige Schwenkachse, die mehr oder weniger vertikal und ebenfalls in der Fensterebene liegt. Diese ermöglicht eine gezielte Steuerung einer "rechts-links"-Lenkung der Lichtstrahlen zur Umlenkung der Strahlen gemäß einer Variation eines Winkels ϕ, beispielsweise definiert zwischen der Normalen auf die Fensterebene und der Spiegelausrichtung um die letztgenannte, in der Fensterebene liegende Schwenkachse. Da die sich die außen befindende Lichtquelle (z.B. Sonne zeitlich veränderlich oder Scheinwerfer ist ortsfest) das Fenster im allgemeinen schräg von oben und schräg von der Seite beleuchtet, können die oben gezeigten Steuerungsmöglichkeiten die Bewegungen der Lichtquelle kompensieren, oder bewusst eigene Bewegungen des umgelenkten Lichts in beiden Winkelfreiheitsgraden realisieren.

Wie sich aus der oben beschriebenen Lehre zweifelsfrei ergibt, kann man nun durch programmgesteuerte Ansteuerung der einzelnen Mikrospiegel 36 die Einzelmodule 12 eines gesamten Fensterpanels erreichen, das beispielsweise sämtliches, direktes Sonnenlicht auf einen relativ kleinflächigen Bereich an der Zimmerdecke umgelenkt wird. Dieser dann hell erleuchtete Fleck kann auch rechts / links verschoben werden, je nach eingestellten Winkeln. Eine solche gezielte Bündelung des direkten Sonnenlichts wird einfach dadurch erzielt, dass die Mikrospiegel des Panels in ihrer Erstreckung von rechts nach links und von oben nach unten jeweils kontinuierlich in kleinen Schritten so viel verändert werden, wie es gerade nötig ist, damit jeder einzelne Mikrospiegel das auf ihn fallende Strahlenbündel genau in die gezielt vorgewählte Zielfläche lenken kann. Dies kann in einem entsprechenden Steuerprogramm in dem zum Gesamtsystem gehörenden Steuergerät 18 mittels Implementierung elementarer, geometrischer Formeln und Zusammenhänge erfolgen. Ein entsprechender Treiber, der die elektromechanische Charakteristik des Panels abbildet, kann benutzt werden, um entsprechende Steuerbefehle für jeden, individuellen Mikrospiegel gezielt zu bewirken.

Im folgenden werden grundlegende Leitlinien für die Herstellung eines erfindungsgemäßen Mikrospiegelvorrichtung gegeben. Zunächst ist dabei festzustellen, dass die Basis der Herstellung übliche, im Stand der Technik bekannte Dünnschichtherstellungsprozesse sind, bei denen dünne Schichten durch Aufdampfen, Aufschleudern, Tauchbeschichtung, Sputtern, Galvanisieren, etc. hergestellt werden und die durch weitere lithografische Herstellungsprozesse dann kleinräumig und meist in planparallelem Aufbau zu den vorher aufgebrachten Schichten strukturiert werden können, je nach dem, wie groß die Strukturen in der Fotomaske sind. Insoweit wird vollständig auf Lehrbücher verwiesen, die die vorgenannten Techniken beschreiben.

### Herstellungsverfahren:

Im folgenden werden die wichtigsten Herstellungsmerkmale exemplarisch für das in Fig. 5 gezeigte Ausführungsbeispiel erläutert wie folgt:
I. Für eine Verwendung im Fensterbereich und zur Herstellung von Einzelmodulen quadratischer Form mit einer Kantenlänge von knapp 12,5 cm wird als Grundträgerfläche 30 eine dünne Glasscheibe als Glassubstrat mit diesen Abmessungen verwendet. Anstelle von anorganischem Glas kann auch ein anderes transparentes Material, organische Gläser (z.B. Plexiglas), transparente Kunststoffe bzw. Polymere evtl. unter Beimischung einer Abtönfarbe verwendet werden.
II. In einem zweiten Schritt werden planare Elektroden 38 A bzw. 38 B sowie das zugehörige Ansteuerungsnetzwerk für die Leiterbahnen beispielsweise durch Aufdampfen von leitenden Materialien, z.B. Metallen (Aluminium,...) oder z.B. ITO (engl. indium tin oxide), oder z.B. leitfähige Polymere (Poly[p-Phenylen],...), ggf. durch eine galvanische Verstärkung unterstützt auf das Glassubstrat 30 aufgebracht. Dieser Schritt kann durch Aufdampfen der elektrisch leitenden Materialien, verbunden mit üblichen lithografischen Strukturierungstechniken erfolgen. Bei Leitungskreuzungen werden Leitungen wie üblich durch eine isolierende Zwischenschicht voneinander getrennt.
IIIa). In einem dritten Schritt erfolgt das Aufbringen einer Opferschicht mit definierter Dicke, die im wesentlichen durch die Höhe der in Fig. 5 dargestellten Halteelemente 32 A und 32 B vorgegeben ist. Die Höhe der Opferschicht sollte wenigstens so hoch sein, dass der beabsichtigte, maximale Schwenkausschlag eines Mikrospiegelelementes 36 erfolgen kann, ohne dass der Mikrospiegel an die Grundplatte 30 stößt. Diese Opferschicht soll die Halteblöcke 32 A und 32 B bilden. An diesen Stellen muss sie nachfolgend erhalten bleiben, und an allen anderen Stellen wird die Opferschicht nachfolgend weggeätzt, um einen Freiraum auszubilden, der die spätere Spiegelschwenkung ermöglicht. Um eine hohe Transparenz zu gewährleisten, wird die Opferschicht vorzugsweise bis auf das Glassubstrat an diesen Stellen entfernt. Dies gelingt mit heutigen technologischen Verfahren perfekt. Die maximale Gesamttransparenz des Fensters ist dabei lediglich durch das Verhältnis "transparente Öffnungen" zu "nicht transparenten Rahmen" bestimmt. Es sei darauf hingewiesen, dass der Rahmen auch transparent gestaltet werden kann (z.B. elektrische Leitungen aus transparentem ITO, Halteblöcke aus Plexiglas und Grundplatte aus anorganischen Gläsern.
   Als Materialien der Opferschicht kommen in erster Linie solche Materialien in Frage, die sich gegenüber allen anderen verwendeten Materialien selektiv ätzen lassen und die gegenüber Witterung, Feuchtigkeit und Temperaturunterschieden relativ unempfindlich sind, eine ausreichende mechanische Festigkeit aufweisen und kein nennenswertes plastisches Fließen aufweisen (ohne Hysterese). Beispielsweise kommen Materialien, etwa Polymethylmethacrylat, Siliziumdioxid oder ein UV-Fotolack in Frage, solange er sich mit einer definierten Dicke auftragen lässt.
   Beispielhaft sei ferner die Materialklasse der thermotropen Hauptketten-Flüssigkris talline-Polymere genannt. Diese Materialklasse lässt sich mit bestimmten organischen Lösungsmitteln einerseits gut lösen (Opferschichteigenschaft) und erfüllt auf der anderen Seite auch relativ hohe, mechanische Stabilitätskriterien, falls diese Materialien gleichzeitig als Teil der Halteblöcke zum Einsatz kommen.
   III.b). Alternativ zu IIIa) wird eine Variante angegeben, welche Halteblöcke mit erhöhter Festigkeit liefert. Im wesentlichen wird dabei der Prozessschritt IIIa) wie folgt ersetzt. Dazu wird ein tiefenlithographiefähiger Photolack (z.B. PMMA) aufgebracht, in welchem die Formen aller Halteblöcke durch Belichten und Entwickeln als Negativ definiert werden. Durch selektives Auffüllen (z.B. galvanische Prozesse) werden stabile Halteblöcke definiert.
   Nachfolgend werden die weiter unten folgenden Prozessschritte IV, V, und VI angewandt, wobei der verbleibende Photolack (Opferschicht) nasschemisch entfernt wird. Ferner ist dabei der Prozessschritt II derart zu modifizieren, dass gleichzeitig zu den Elektroden auf der Grundplatte geeignete leitfähige Grundflächenschichten der Halteblöcke definiert werden, welche jeweils gerade die Form der Verbindungsfläche Halteblock/Grundplatte aufweisen. Dabei muss auf eine elektrische Isolation zwischen oberen und unteren Elektroden geachtet werden. Vorteilhaft anwendbar ist auch der Einsatz der LIGA-Technik mit kostengünstigen Abformschritten.
IV. In einem weiteren Herstellungsschritt wird eine Schicht aufgebracht, die die Spiegel oder gemäß einer besonderen Ausführungsvariante die optischen Filter, und die Brückenelemente 34 A und B mit ihren Halteschichten auf den Halteelementen 32 A und B bildet. Als Material kommt beispielsweise eine Einfachmetallschicht beispielsweise aus Aluminium oder eine dielektrische Mehrfachschicht mit einer äußeren elektrisch leitfähigen aber transparenten Schicht (z.B. ITO) oder eine Polymerschicht mit stark reflektierenden und leitfähigen Eigenschaften in Frage.
   In einem kostengünstigen Ausführungsbeispiel erstreckt sich die leitende Schicht über die Spiegel, die Verbindungsbrücken und über die Halteschichten, und dient gleichzeitig als Elektrode (vor allem auf den Spiegelflächen), als Leiterbahn (vor allem auf den Verbindungsbrücken) und als Halteschichten auf den Halteelementen.
V. In einem weiteren Schritt werden vorzugsweise am Rand eines jeden Einzelmoduls umlaufende Abstandhalter aufgebracht, beispielsweise aus dem selben Material wie die vorgenannte Opferschicht, um in einem weiteren (späteren) Schritt das Anbringen einer äußeren Schutzschicht bewirken zu können, die sich flächig über die gesamte Modulfläche erstreckt, um eine hermetische Versiegelung gegen Staub und Feuchtigkeit sowie einen Spannungsschutz zu realisieren. Diese Schutzschicht kann beispielsweise auf die vorgenannten Abstandhalter, die besonders bevorzugt als umlaufende Randbegrenzung vorliegt, durch Kleben aufgebracht werden.
VI. In einem nächsten Schritt wird die vertikale Strukturierung vorgenommen, indem ein Ätzvorgang senkrecht zur Grundplatte 30 hin vorgenommen wird. Anschließend werden selektiv die oben beschriebenen Teile der Opferschicht entfernt, wobei die Verbindungsbrücken und Spiegel entstehen..
VII. In einem weiteren Schritt werden die Anschlussstecker für den elektrischen Anschluss der Einzelmodule untereinander, siehe zurück zu Fig. 2, für die elektrischen Kontakte 24 und die mechanischen Verbindungen 22 aufgebracht und fest mit dem Modulrahmen bzw. leitend für den elektrischen Kontakt mit dem Ansteuerungsnetzwerk verbunden.

Ebenso wird der oben bei der Beschreibung von Fig. 1 erwähnte Infrarotsensor 16 mit der dafür vorgesehenen Stelle am Ansteuerungsnetzwerk kontaktiert und die oben erwähnte Anschlusskontaktierung für die Gleichspannungsversorgungsleitung 20 mit einem geeignet vorgesehenen Anschlussstecker 21 an vorzugsweise nur einem Modul vorgesehen, beispielsweise dem Einzelmodul 12, das später einer der Ecken der Fensterfläche zuordnet wird.

Optional kann je nach späterer Verwendung des so gefertigten Moduls noch ein hermetischer Abdichtungslack über den gesamten Randbereich des Moduls gebracht werden, damit das Modulinnere einen langzeitstabilen, verwitterungsresistenten Zustand behält.

Dann werden die somit hergestellten Module zusammengesteckt, wie es in Fig. 2 skizziert ist, bis ein Panel mit der gewünschten Größe gebildet ist. Beispielsweise kann bei einer Einzelmodulgröße von 12,5 cm x 12,5 cm ein Raster von 8 x 8 Einzelmodulen zusammengesteckt werden, um ein zusammenhängendes Panel zu erhalten, dass später als Ganzes in ein Fenster mit ausreichender Größe eingelegt werden kann, so dass eine Anordnung, wie sie in Fig. 10 schematisch skizziert ist, erfolgt. Die Einzelmodule 12 haben zu diesem Zweck in vorteilhafter Weise auch geeignet steckbare Einrastverbindungen 22 A und B an den übrigen Kanten, die in Fig. 2 nicht gezeigt sind. Dabei können die Einrastverbindungen in Querrichtung auch eines anderen Typs sein - beispielsweise eine L-förmige Rastung - im Vergleich zu dem Typ der Längsrichtung wie in Fig. 2 gezeigt, um das Zusammenstecken zu vereinfachen.

In optionaler Weise kann dieses gesamte Panel nun noch auf einen weiteren Träger 15 aufgebracht werden, wofür beispielsweise eine weitere Glasscheibe in Frage kommt. Dies würde sich besonders dann empfehlen, wenn eine erhöhte mechanische Stabilität des gesamten Panels erforderlich sein sollte. Dann kann es bei der Fertigung der Fenster entsprechend eingesetzt werden.

In Abwandlung des vorstehend Beschriebenen kann das erfindungsgemäße Konzept auch beinhalten, das Spiegelelement als Bragg-Filterelement auszubilden, wobei über eine zwischen den Elektroden angelegte Steuerspannung und dadurch bewirkte mechanische Aktuation eine einstellbare Filterfunktion für vorbestimmte Wellenlängenbereiche realisiert werden kann.

Alternativ können die Verbindungsbrücken, Spiegel und Halteblöcke aus ursprünglich flächigen Elementen aufgestellt werden (siehe z.B. M.H. Kiang, et al. IEEE Phot. Technol. Lett. 8, 1707 (1996)).

Die erfindungsgemäße Mikrospiegelanordnung kann, soviel wird dem Fachmann auf dem Gebiet der Dünnschichtherstellung und Mikrostrukturierung klar sein, auf vielen verschiedenen Wegen hergestellt werden. Charakteristisch für das erfindungsgemäße Herstellungsverfahren ist daher lediglich die Verwendung solcher Materialen, die ein vernünftiges Preis/ Leistungsverhältnis für eine großflächige Verwendung im Fenster oder Fassadenbereich zulassen.

Desweiteren ist es vorteilhaft, vorzugsweise das erfindungsgemäße Gesamtsystem so auszulegen, dass es in einem Niedervoltbereich von weniger als etwa 60 Volt betrieben werden kann. Diese Vorgabe ist bei der Formgebung der Einzelkörper, also für Halteelement 32, Brückenelement 34 und Spiegelelement 36 hinsichtlich der zu konstruierenden Hebelkräfte zu berücksichtigen, damit die benötigten Aktuationsspannungen bei der Implementierung durch elektrostatische Anziehungskräfte nicht zu hoch werden.

### Verwendungen:

Die vorliegende Erfindung eröffnet ein reichhaltiges Spektrum an Verwendungsmöglichkeiten für ein erfindungsgemäßes Panel 15, Gesamtsystem bzw. für erfindungsgemäße Einzelmodule 12. Diese werden im folgenden skizziert:
Zunächst kann ein Gesamtsystem der vorliegenden Erfindung aus Panel, Stromversorgung, Ansteuerungssensor und Steuergerät mit verschiedenen weiteren Inputgrößen beschickt werden, um ein jeweils individuelles Ziel zu erreichen. Als Beispiel sei ein Sonnenstandsensor genannt und ein weiteres "Personensensorsystem" genannt, etwa eine IR-Kamera, die mit einem Ultraschallsystem zwecks Positionsbestimmung der Person zusammenarbeitet. Insoweit als dieses Personensensorsystem betroffen ist, wird auf gängigen Stand der Technik beispielsweise im Bereich PKW- Innenraumüberwachung verwiesen. Dann kann als Regelziel definiert werden, immer die direkte Umgebung im Raum, dort wo sich die Person jeweils aufhält besser auszuleuchten.

In diesem Fall würde das Steuergerät 18 sowohl mit dem Sonnenstandsensor als auch mit dem Personensensorsystem verbunden werden, und eine entsprechende Programmierung kann die Spiegel je nach aktuellem Sonnenstand und aktuellem Aufenthaltsort einer Person einstellen. Beispielsweise kann eine Fläche von 1 Quadratmeter jeweils über der Person an der Raumdecke durch Umlenkung des direkten Sonnenlichts an diese Stelle beleuchtet werden, wodurch die Person und ihre direkte Umgebung, z.B. ihre Arbeitsfläche, immer relativ hell beleuchtet würde. Es ist klar, dass ein Fachmann auch andere Regelziele als sinnvoll erkennt und nach dem selben oder einem abgewandelten Prinzip wie hierin vorgeschlagen realisieren kann. Für alle Zwecke der reinen Lichtumlenkung empfiehlt es sich, relativ hoch reflektierende Materialien zu verwenden. Die Spiegelfläche sollte daher aus einem relativ gut reflektiven Metall oder Polymer oder aus einer dielektrischen Vielfachschichtstruktur bestehen, wie bereits oben dargestellt wurde, oder kann je nach gegebenen Umständen auch aus einer Kombination solcher Materialien bestehen.

Für den Bereich der Lichtumlenkung an Fensterflächen kann also der Vorteil erzielt werden, dass sehr große Helligkeitskontraste, die in einem Raum insbesondere bei direkter Sonneneinstrahlung durch das Fenster auftreten würden, gemindert werden und die Helligkeitsverteilung im Raum kann je nach den Wünschen des Benutzers positiv beeinflusst werden. Neben der Wirkung als Blendschutz, als Hitzeschutz und als Sichtschutz, die bereits weiter oben im Zusammenhang mit Fig. 10 erläutert wurden, können die erfindungsgemäßen Mikrospiegelarrays aber auch zur solaren Wärmegewinnung verwendet werden, indem beispielsweise ein Fluid, das in einem Röhrensystem zirkulieren kann, durch die gebündelte Strahlung gezielt erwärmt wird, oder die an die Decke reflektierte Strahlung zur Verflüssigung eines Gels genutzt wird, das bei abnehmenden Raumtemperaturen wieder verfestigt und seine dabei frei werdende Energie in den Raum abgibt.

Desweiteren können natürlich auch künstlerische Akzente im Raum durch bewusste Steuerung der Mikrospiegel erzielt werden. Es können beispielsweise Lichtmuster an die Wand geworfen werden, wobei nur das von außen kommende Sonnenlicht verwendet wird oder aber eine weitere Lichtquelle, etwa ein heller Halogenscheinwerfer, eingesetzt wird, die etwa von außen an der Fassade angebracht sozusagen als künstliche Sonne wirkt. Des weiteren kann das erfinderische Prinzip auch zur Steuerung der Intensität der Wärmestrahlung vorteilhaft ausgenutzt werden, die impliziert durch die natürliche Sonnenstrahlung in den Raum gelangt.

Wenn die Mikrospiegel gemäß einer weiteren bevorzugten Ausführungsvariante als dielektrische Vielfachschichten ausgeführt sind, so können gezielt optische Kanten- oder Bandpassfilter mit unterschiedlicher spektraler Charakteristik erzeugt werden. Durch Variation des Schwenkwinkels (Kippwinkels) kann eine spektrale Durchstimmung erfolgen. Dabei können einfache DBR-Spiegel oder auch FP-Filter auf der Basis von mindestens 2 DBR-Spiegeln eingesetzt werden. Die optischen Grundlagen dazu sind u.a. zu finden in Kasap, "Optoelectronics and Photonics", Prentice Hall 2001. Dabei könnte insbesondere eine jahreszeitenangepasste Regelung des IR-Anteils des Sonnenlichtes erfolgen. In heißen Jahreszeiten oder während heißer Tageszeiten würde der Hauptanteil der IR-Strahlung reflektiert und würde nicht in den Raum gelangen, in kalten Jahreszeiten oder während heißer Tageszeiten würde umgekehrt verfahren.

Im Vergleich zu herkömmlichen Fensterelementen zur Lichtumlenkung werden die mechanischen Belastungen beispielsweise durch Wind und Regen komplett ausgeschaltet, da die Mikrospiegel im Innern einer Doppelglasscheibe ihre bevorzugte Verwendung finden. Sie können natürlich auch auf der Innenseite einer Einfachverglasung ohne größere Probleme nachträglich angebracht werden. Es kommt jedoch noch ein weiterer beträchtlicher Vorteil dadurch hinzu, dass die Tatsache vorteilhaft ausgenutzt wird, dass ein Bauteil, je kleiner es ist, umso geringere mechanische Beanspruchungen während seiner Schwenkbewegung erleiden muss, denn solche Mikrospiegel und deren Arrays sind mit abnehmender Dimension zunehmend wartungsfreier und von zunehmend langer Lebensdauer. Diese Effekte treten bei Spiegelflächen unterhalb von 1mm² bereits sehr deutlich in Erscheinung. Wie ein Fachmann auf dem Bereich der Mikromechanik zweifelsohne erkennen wird, besteht daher ein beträchtlicher Vorteil bei der Verwendung der erfindungsgemäßen Mikrospiegel insbesondere dann, wenn sie in einem Bereich von deutlich unter 1 mm Kantenlänge bzw. einer Fläche von unter 1 mm² gebaut werden.

Desweiteren kann ein erfindungsgemäßes Mikrospiegelmodul auch als Bauelement außerhalb von Fensterbereichen, nämlich in der Fassade von Gebäuden vorteilhaft eingesetzt werden. In diesem Falle soll es nicht transparent sein, sondern es erfüllt seine Funktion dadurch, dass das auftreffende Sonnenlicht gezielt in verschiedene Richtungen gelenkt wird. Dadurch können gezielt Muster in einem Panel erzeugt werden, ja es können sogar große Muster entlang zusammenhängender Panelflächen von mehreren 10 m erzeugt werden, wodurch eine großflächige Fassade als riesiges Display verwendet werden kann. Wenn zu wenig direktes Sonnenlicht vorhanden ist, um nennenswerte Lichteffekte zu erzielen, so kann eine Fassade künstlich beleuchtet werden, wodurch der gewünschte Effekt unabhängig von den tageslichtbedingten Verhältnissen erzielt werden kann. Durch diese Funktion als architektonisches Bauelement zur ästhetischen oder wie auch immer multifunktional gestalteten Fassade wird gegebenenfalls in Verbindung mit der Verwendung von DBR-Spiegel mit Farbfilterfunktion, für die Farbgebung an Fassaden ein riesiges Potential eröffnet, um den Lebensraum "Stadt" enorm zu bereichern, denn ein überaus großer Teil der in Städten wahrgenommenen Flächen besteht nun einmal aus Gebäudefassaden.

Gemäß weiteren Variationen können die Mikrospiegel auf ihrer Vorder- bzw. Rückseite und selbst im Inneren aus verschiedenen Materialien bestehen. Hier ergibt sich ein großes Spektrum an Variationsmöglichkeiten. Nur beispielhaft seien die folgenden aufgeführt:

Die eine Fläche kann das von außen kommende Licht absorbieren und in Wärme umwandeln, die andere Fläche kann hochreflektierend ausgebildet sein. Wenn nun die Spiegel einen so weiteren Schwenkbereich besitzen, dass je nach Wunsch entweder die absorbierende oder die hochreflektierende Fläche vom Sonnenlicht getroffen wird, können verschiedene Wirkungen in einem jeweils individuellen Spektralbereich erzielt werden:
Beispielsweise kann es im Winter gewünscht sein, infrarote Strahlung von außen durch das Fenster hindurchgehen zu lassen und infrarote Wärmestrahlung von innen wieder zurück in den inneren Bereich zu reflektieren. Ebenso kann es gewünscht sein, den sichtbaren Spektralbereich von außen gesteuert jeweils über die Winkel der Spiegelflächen nach innen transmittieren zu lassen. Im Sommer hingegen kann es gewünscht sein, die infrarote Strahlung von außen wieder nach außen zu reflektieren, die Infrarotstrahlung von innen nach außen zu transmittieren, hingegen aber die sichtbaren spektralen Anteile von außen in das Rauminnere transmittieren zu lassen. Ein jeweiliger, individuell eingestellter Mischbetrieb kann im Frühjahr bzw. im Herbst oder in den Dämmerungszeiten zwischen Tag und Nacht erfolgen.

Insbesondere durch die Verwendung von dielektrischen Multischichtspiegeln lassen sich solche komplexen Anforderungen erfindungsgemäß mit Hilfe verschiedener spektraler Stoppbänder und der Variation des Schwenkwinkels wenigstens zu einem beträchtlichem Teil erfüllen, wie bereits oben angesprochen. Solche Fenster besitzen dann eine außerordentlich hohe Funktionalität und ein enormes Energiesparpotential.

In einer Niedrigkostenvariante der erfindungsgemäßen Mikrospiegelvorrichtungen weisen die Spiegel überhaupt keine Drehachse auf, jedoch kann die Spiegelform und ihre Orientierung bzgl. der gemeinsamen Grundträgerfläche abhängig von ihren Positionen in der Fläche variiert werden. Wenn die Spiegelform und die Spiegelorientierung geändert wird, so hat dies dann meist auch Einfluss auf die Formgebung der Aufhängungen und Ankerelemente für die Spiegel, d.h. für die in den Zeichnungen erläuterten Halteelemente 32 und Brückenelemente 34. In diesem Fall empfiehlt sich eine rechnerische Optimierung gezielt auf den gewünschten Anwendungszweck. Bei dieser Optimierung sollten folgende Aspekte eine besondere Berücksichtigung finden:
Die Orientierung der Fassade bzgl. der Himmelsrichtung und der Lage des Gebäudes bzgl. der geografischen Breite und der Winkelbereiche, unter denen das Gebäude von Passanten in den meisten Fällen gesehen wird. Diese Einflussfaktoren können mit einer quantitativen Wichtung belegt werden, um ein gewünschtes Optimum zu erreichen. In einem solchen Fall gibt es eine feste Einstellung der Schwenkwinkel oder bei gekrümmten Spiegeloberflächen eine fest vorgegebene Krümmungsorientierung der Spiegelflächen. Ohne Aktuation variieren die geometrischen Formen und Orientierungen der Verankerungen für die Spiegelelemente in der Fläche des Spiegelarrays und ruft einen bestimmten optischen Effekt hervor. Dabei kann eine fassadenortsabhängige Lichtintensitätsänderung bewirkt werden. Die Intensität wird dabei durch das Tastverhältnis zwischen wirksamen Spiegelflächen und absorbierenden oder streuenden Flächenanteilen bestimmt.

Eine geringe außentemperaturbedingte Variation der Spiegelkrümmungen ruft dabei noch periodische Farbverschiebungen über längere Zeiträume hervor.

Wenn ein Raum beleuchtet werden soll, sind für eine wirkungsvolle Beleuchtung zwei Drehachsen pro Spiegelelement wünschenswert, die beide etwa einen Schwenkwinkelbereich von mindestens 40 Grad aufweisen sollten.

In Modifikation des vorerwähnten "Bulk-Micromachining" zur Herstellung der Mikrospiegelarrays für Fensterflächen kann auch weniger kostenintensives "Surface-Micromachining" eingesetzt werden, wenn es um Anwendungen an Fassadenflächen geht, da dabei kleine Winkel ausreichen.

Des weiteren können die erfindungsgemäßen Mikrospiegelarrays als Einzelmodul 12 oder als Panel 15 bestehend aus einer Vielzahl von zusammengesetzten Modulen 12 auch vorteilhaft in der Beleuchtungstechnik zur Umlenkung von Kunstlicht benutzt werden, um diverse Beleuchtungsziele zu verfolgen. Dabei sind insbesondere variable und im besonderen Maße akzentuierte Beleuchtungsverteilungen realisierbar.

Desweiteren können die erfindungsgemäßen Mikrospiegelarrays auch in sehr vorteilhafter Weise zur Konzentration von Sonnenlicht beispielsweise für die solarthermische Nutzung selbst in der Größenordnung von Kraftwerksanforderungen ausgenutzt werden. Denn im Vergleich zu herkömmlichen Spiegelanordnungen mit makroskopischen Spiegeln werden die mechanischen Belastungen bei Mikrospiegeln gemäß der vorliegenden Erfindung erheblich reduziert. Dies führt zu beträchtlichen Einsparungen bei der Konstruktion, der Wartung und zu einer wesentlich erhöhten Lebensdauer der spiegelnden Anlagen. Ähnliches gilt für die Umlenkung und Konzentration von Sonnenlicht für andere Zwecke, etwa bei photovoltaischen Konzentratorsystemen.
Des weiteren können die erfindungsgemäßen Mikrospiegel, Module und Panels bei der Umlenkung von Sonnenlicht in der Verwendung in Fassaden- und Dachelementen wahlweise zur Nutzung der solaren Strahlung zum passiven Heizen oder zum aktiven Nutzen in Kollektorsystemen und/oder Fotovoltaiksystemen vorteilhaft verwendet werden.

Der einschlägige Fachmann auf dem jeweiligen Gebiet der oben skizzierten, unterschiedlichen Verwendungen für die erfindungsgemäßen Mikrospiegelarrays wird erkennen, dass ein Gesamtsystem gemäß der Erfindung vorteilhaft mit weiterer Sensorik betrieben werden kann, die dann für die jeweilige Verwendung spezifisch ausgewählt wird. Beispielsweise kann bei allen Verwendungen im Zusammenhang mit Solarstrahlung in vorteilhafter Weise ein Sonnenstandssensor und optional ein zusätzliches weiteres Sensorsystem eingesetzt werden, dass die Wolkenverteilung und/oder die Helligkeitsverteilung im sensorisch erfassten Halbraum, oder direkt am Himmel erfasst. Ein besonderer Vorteil im Bereich der Solarthermie ergibt sich durch das erfinderische Konzept dadurch, dass es möglich ist, die individuellen Mikrospiegel individuell gesteuert auf einen bestimmten Punkt zu richten, so dass die Strahlung gezielt auf die Geometrie der zu erwärmenden Elemente umgelenkt werden kann. Diese gerichtete, individuell steuerbare Strahlumlenkung, insbesondere für das direkte Sonnenlicht, kann also auch für völlig unregelmäßig geformte Strahlun gsabsorberkörper realisiert werden. Im Vergleich zu herkömmlichen Makrospiegeln ist hier eine beträchtliche Erhöhung des Wirkungsgrades der Solarthermischen Anlage zu erwarten.

Desweiteren wird der einschlägige Fachmann ebenso verstehen, dass durch einen gezielt gewählten Krümmungsradius der Mikrospiegelelemente auch eine Fokussierung von parallel ankommenden Lichtstrahlen, insbesondere von Sonnenstrahlen erfolgen kann. Dabei muss dann der Abstand vom Spiegelelement auf die angestrebte Fokussierungsebene oder Fokussierungspunkt dem Krümmungsradius angepasst sein. Auch dieses vorteilhafte Merkmal lässt sich in Kombination mit der leichten Nachführbarkeit der einzelnen Mikrospiegel sehr vorteilhaft im Bereich Solarenergie ausnutzen, beispielsweise der fokussierende Effekt im Bereich der Solarthermie, wo Sonnenstrahlen auf einen relativ kleinen Raumpunkt, den Absorber fokussiert werden, oder im Bereich der Fotovoltaik, wo es primär darum geht, die gesamte Oberfläche eines Solarpanels möglichst gleichmäßig und möglichst intensiv zu bestrahlen.

Im Stand der Technik wird Licht auf leistungsfähige Solarzellenflächen mit makroskopischen Hohlspiegelanordungen fokussiert. Diese Gesamtanordnungen wird oft nachführbar ausgestaltet. Dem Fachmann ist jedoch die enorme Winddruckanfälligkeit dieser Systeme bekannt. Dadurch, dass erfindungsgemäß individuell schwenkbare Mikrospiegel eingesetzt werden, können diese auf stabileren Einheiten fixiert werden, wobei die Gesamteinheit nur noch wenig, oder im Idealfall überhaupt nicht mehr bewegt werden muss.

Gemäß einem weiteren, vorteilhaften Aspekt der vorliegenden Erfindung können aufgrund der gezielt realisierbaren Lichtumlenkung auch über relativ große Winkelbereiche hinweg auch Solarzellenarrays mit unterschiedlicher Effizienz und dadurch verschiedenen Anschaffungskosten nebeneinander eingesetzt werden und mit den erfindungsgemäßen Mikrospiegeln tageszeitversetzt individuell mit Licht versorgt werden.

Gemäß einem weiteren, vorteilhaften Aspekt der vorliegenden Erfindung können die erfindungsgemäßen Mikrospiegelanordnungen auch zur gezielten Lichtumlenkung verwendet werden, ohne dass bewegliche Mikrospiegel vorhanden sind. In dieser Niedrigpreisvariante variiert die Spiegelform und die Spiegelorientierung nach einem vorgegebenen Muster auf der Arrayfläche gemäß einer vorab durchgeführten rechnerischen Optimierung, die gezielt auf den Verwendungszweck abgestellt ist. Grundidee dabei ist, dass es bei Verwendung im Bereich der Solarenergie immer eine gewisse Teilfläche auf dem erfindungsgemäßen Mikrospiegelpanel gibt, die das auftreffende Sonnenlicht gerade genau richtig auf das Zielobjekt umlenkt. Konkret kann dies so ausgeführt sein, dass beispielsweise morgens um 9.00 Uhr eine Teilfläche in der linken unteren Ecke des erfindungsgemäßen Panels die gewünschte Lichtumlenkung bewirkt, mittags um 12. 00 Uhr dies eine zentrale Teilfläche bewirkt und nachmittags um 17.00 Uhr dies eine Teilfläche bewirkt, die eher dem oberen rechten Rand des Panels zuzuordnen ist.

Wie man aus diesem Beispiel ersehen kann, können andere Teilflächen, die für ein bestimmtes vorgegebenes Zielobjekt gar nicht benutzt werden, gezielt ausgestaltet werden, um ein weiteres Zielobjekt für die Lichtumlenkung mit dem umgelenkten Licht zu beaufschlagen. Dieses zweite Objekt würde dann aufgrund solcher Teilflächen beleuchtet werden, die im vorgenannten Beispiel nicht benutzt wurden, wobei eine Doppelnutzung nicht schadet. Dem einschlägigen Fachmann wird es auch klar sein, dass das vorliegend geschilderte erfinderische Konzept auch vorteilhaft in Hybridsystemen etwa Kombinationssystemen aus fotovoltaischen und fotothermischen Systemen vorteilhaft genutzt werden kann.

Obwohl die vorliegende Erfindung anhand eines bevorzugten Ausführungsbeispiels vorstehend beschrieben wurde, ist sie darauf nicht beschränkt, sondern auf vielfältige Weise modifizierbar.

Beispielsweise kann die Dimensionierung der Fläche der Einzelmodule an Herstellungsanlagen angepasst werden, die bereits existieren und vorher zur Herstellung von IC- Bauteilen, Festplatten im Computerbereich, etc, verwendet wurden.

Weiter kann auch die dem Mikrospiegelelement zugeordnete Elektrode integral mit diesem ausgebildet sein, wenn dieses aus elektrisch leitfähigem Material besteht.

Auch das Mikrospiegelelement kann aus derselben Schicht stammen wie das Brückenelement, wenn beide voneinander durch eine das Brückenelement definierende Aussparung (beispielsweise per Ätzung, s. Fig. 4 und Fig. 6) getrennt sind.

Schließlich können die Merkmale der Unteransprüche im wesentlichen frei miteinander und nicht durch die in den Ansprüchen vorliegende Reihenfolge miteinander kombiniert werden, sofern sie unabhängig voneinander sind.

Weitere Anwendungen liegen in der Präsentation von jeweils pixelartig aufgelöstem Text und /oder Graphik. Dazu werden z.B. in einem Raum alle Fensterflächen bis auf eine mit den entsprechenden Mikrospiegeln verdunkelt und ein Fenster im Durchlicht als Displayerzeugerfläche eingesetzt. Die Aktuationssignale der Mikrospiegel-Gruppen davon werden durch einen Computer über ein Steuergerät und die elektrischen Zuleitungen an die Mikrospiegel-Gruppen weitergeleitet. Dabei können alle Graustufen beliebig angesteuert werden. Das Bild selbst entsteht dann durch Umlenkung des Sonnenlichts oder Scheinwerferlichts auf einer hinter dem Fenster im Rauminneren liegenden Schirmfläche, etwa einer Wand geeigneter Farbe.

Weitere Anwendungsmöglichkeiten bestehen in der gezielten Lichtlenkung durch das Ersetzen der in vielen Kunstlichtquellen existierenden, reflektorartigen Spiegel durch steuerbare oder starre Vielfachspiegelanordnungen, die flacher gebaut werden können, da die Hohlspiegelwirkung nicht wie im Stand der Technik durch eine unveränderliche 3D- Raumform einer einstückig ausgeführten 3D- Spiegelfläche, sondern durch individuelle Winkeleinstellung der Mikrospiegel erzielt werden kann. Die Mikrospiegel sind dabei vorteilhaft so voneinander beabstandet, dass eine möglichst geringe Abschattung der Mikrospiegel untereinander erfolgt.

### Für KFZ-Frontscheinwerfer:

Bei der Kurvenfahrt oder durch Bodenwellen und Schlaglöcher in der Fahrbahn wandert der Lichtkegel oft aus dem relevanten Bereich heraus und kann generell zu Blendungen des entgegenkommenden Verkehrs führen. Im Rahmen der erfindungsgemäßen Lösung und in Verbindung mit neueren Techniken zur selektiven Ansteuerung von "Pixellicht", wie etwa veröffentlicht in der deutschen Zeitschrift STERN 41 / 2002, S. 118 bis Seite 120 können mit steuerbaren Spiegelarrays mit erfindungsgemäß separatem Steuergerät stabile und verkehrstechnisch sichere Helligkeitsverteilungen erzielt werden, wobei die Kosten durch die Verwendung der erfindungsgemäßen Materialien weiter gesenkt werden können. Dabei können die Scheinwerferspiegelflächen auch eben oder nur leicht gewölbt sein, denn die Einzelspiegel oder Gruppen davon können je weiter außen im Reflektorbereich gelegen, eine umso stärker abgewinkelte Ruhelage besitzen, von der aus sie weiterbewegt werden können, wenn dies erforderlich ist. Mit einem solchen erfindungsgemäßen "Flachscheinwerfer" kann in vorteilhafter Weise ein neues Designelement für den Automobilbereich geschaffen werden, und der Scheinwerfer benötigt weniger Einbauraum.

### Für Halogenlampen und Leuchtstofflampen:

Durch die im Raum meist fest installierten Lichtquellen, welche unterschiedliche Intensitäten und Abstrahlwinkel aufweisen, liegt eine stark entfernungsabhängige und inhomogene Raumausleuchtung vor. Dabei fällt das Licht nicht immer präzise auf die Stellen, an denen es benötigt wird. Im Rahmen der erfindungsgemäßen Lösung kann mit Spiegelarrays selbst auf der Basis nur jeweils einer Drehachse pro Spiegelelement wesentlich günstigere Helligkeitsverteilungen erzielt werden. Ferner ist in Kombination mit einem Personensensor wie bereits oben beschrieben, eine gezielte Lichtumlenkung mit oder ohne gezielter Bündelung möglich. Auch für eine Objektbeleuchtung (z.B. Statue, Bild) können so gezielt Akzente gesetzt werden.

Viele Lichtquellen besitzen bereits gekrümmte Reflektoren, nachfolgend als "Lampen auf Reflektorbasis" bezeichnet (z.B. Beleuchtungseinheiten auf der Basis von Leuchtstofflampen oder Halogenlampen). Diese Reflektoren könne z.B. durch ein oder mehrere Panels ersetzt werden. In einem Ausführungsbeispiel stehen drei ebene Panels jeweils im 90° Winkel zueinander. Diese Anordnung ist an Retroreflektoren (engl. corner cubes) angelehnt. Jedoch ist auch eine Krümmung der Panels durch folienartigen Aufbau realisierbar.

## Patentansprüche

1. Vorrichtung mit Spiegelelementen **zur Lichtumlenkung auf einer Gesamtfläche im Bereich von Quadratdezimetern oder mehr,** wobei
die Vorrichtung ein Panel (15) bildet, das eine Mehrzahl von Mikrospiegelvorrichtungen (12) umfasst, die ihrerseits eine jeweilige Mehrzahl von mit einer gemeinsamen Grundträgerfläche (30) verbundenen Einzelkörpern (31) enthalten, wobei ein Einzelkörper (31) wenigstens ein über der Grundträgerfläche (30) stehendes Halteelement (32; 32A, 32B) für ein damit verbundenes optisch reflektiv wirkendes Spiegelelement (36) enthält, wobei die Elemente (32; 32A, 32B; 36) der Einzelkörper Strukturelemente aus Schichten eines Dünnschichtherstellungsprozesses sind, und wobei eine leitende Schicht als gemeinsame Steuerelektrode für eine Bewegung einer Gruppe von Spiegelelementen (36) vorgesehen ist, und wobei der Aktuierungsmechanismus auf elektrostatischen Kräften beruht.

2. Vorrichtung nach dem vorstehenden Anspruch, wobei für die Bewegung der Spiegelelemente (36) ein elektrisch steuerbarer Aktuierungsmechanismus vorgesehen ist.

3. Vorrichtung nach dem vorstehenden Anspruch, weiter enthaltend
eine Einrichtung zum Anlegen einer Mehrzahl von elektrischen Steuergrößen an jeweils unterschiedliche, vorbestimmte Gruppen von räumlich benachbarten Spiegelelementen (36), um den Aktuierungsmechanismus anzusteuern. -

4. Vorrichtung nach dem vorstehenden Anspruch, wobei mindestens eine erste Elektrode (34; 36) einem Spiegelelement und mindestens eine zweite Elektrode (38) der Grundträgerfläche (30) zugeordnet ist.

5. Vorrichtung nach Anspruch 3, wobei die Einrichtung zum Anlegen einer Mehrzahl von elektrischen Steuergrößen zum Zwecke einer gezielten Aktuierung von Spiegelelementen (36) eine Einrichtung (16) zum drahtlosen Empfang einer Mehrzahl verschiedener Steuersignale von einem Steuergerät (18) aus enthält.

6. Vorrichtung nach Anspruch 1, wobei die Mehrzahl von Mikrospiegelvorrichtungen in jeweils einzeln miteinander verbindbare Einzelmodule (12) aufgegliedert ist.

7. Vorrichtung nach Anspruch 1, wobei die Spiegelelemente (36) als reflektive Metallschicht oder als dielektrische Mehrfachschicht mit elektrisch leitfähiger Einzelschicht, oder als reflektive Polymerschicht mit leitfähiger Einzelschicht ausgebildet sind.

8. Vorrichtung nach Anspruch 6, wobei sie Verbindungselemente (22, 24) enthält, mit denen Einzelmodule (12) der gleichen Art randseitig verbunden werden kann.

9. Vorrichtung nach dem vorstehenden Anspruch, wobei sie steckbare Verbindungselemente (22, 24) enthält, wobei die Verbindungselemente neben der mechanischen Verbindung auch eine elektrische Steckverbindung zwischen Vorrichtungen gleicher Art enthalten.

10. Vorrichtung nach einem der vorstehenden Ansprüche 3 bis 9, wobei die vorbestimmte elektrischen Steuergröße für jeweils eine Mikrospiegelvorrichtung (12) vorgebbar-ist.

11. Vorrichtung nach Anspruch 1, wobei die Spiegelelemente (36) entweder
a) eben ausgebildet sind, oder
b) sie eine gekrümmte Form aufweisen.

12. Vorrichtung nach Anspruch 1, wobei ein Halteelement (32; 32A, 32B) und ein Spiegelelement (36) aus einem Stück gefertigt sind.

13. Vorrichtung nach Anspruch 1 und 11 Alternative a), wobei die Spiegelelemente (36) rechteckförmig ausgebildet sind.

14. Vorrichtung nach einem der vorstehenden Ansprüche, wobei die Spiegelelemente (36) in regelmäßiger Matrixform aus parallelen Zeilen und parallelen Spalten angeordnet sind.

15. Vorrichtung nach Anspruch 1, wobei ein Spiegelelement (36) als Strukturelement einer Metallschicht oder einer dielektrischen Mehrfachschicht mit leitfähiger Einzelschicht, oder einer leitfähigen Polymerschicht mit reflektierenden Eigenschaften ausgebildet ist, und wobei das Spiegelelement (36) aufgrund einer vorgegebenen Biegesteifigkeit seiner selbst oder der Biegesteifigkeit seiner Verbindung zum Halteelement relativ zur Grundträgerfläche beweglich für einen auf das Spiegelelement wirkenden Aktuationsmechanismus gelagert ist.

16. Vorrichtung nach dem vorstehenden Anspruch, wobei eine für mehrere oder alle Spiegelelemente (36) gemeinsame, flächenhaft ausgebildete Gegenelektrode (38) an der Grundträgerfläche (30) vorhanden ist, und eine zu einem Außenrand der Vorrichtung führende, elektrische Zuleitung (26, 28) und Kontaktierung der Elektroden von Gruppen von Einzelkörpern mittels planarer Leitungen vorgesehen ist zur computergesteuerten, gruppenweisen Adressierung und Aktuierung der Einzelkörperbewegung über die Elektrodenpaare (34, 38).

17. Vorrichtung nach Anspruch 6 und dem vorstehenden Anspruch, wobei eine für mehrere oder alle Spiegelelemente (36) gemeinsame, flächenhaft ausgebildete Gegenelektrode (38) an der Grundträgerfläche (30) vorhanden ist, und eine zu einem Außenrand eines Einzelmoduls (12) führende, elektrische Zuleitung (26, 28) und Kontaktierung der Elektroden von Gruppen von Einzelkörpern mittels planarer Leitungen vorgesehen ist zur computergesteuerten, gruppenweisen Adressierung und Aktuierung der Einzelkörperbewegung über die Elektrodenpaare (34, 38).

18. Vorrichtung nach Anspruch 1, wobei ein Spiegelelement (36) über wenigstens ein Brückenelement (34) vorgegebener Biegesteifigkeit mit dem Halteelement (32; 32A, 32B) verbunden ist.

19. Vorrichtung nach Anspruch 1, wobei das Spiegelelement (36) an zwei Brückenelementen (34A, 34B) befestigt ist, die in paralleler Richtung verlaufend eine Schwenkachse für den Bereich des Spiegelelements (36) bilden und an entgegengesetzten Seiten des Spiegelelements ansetzen, und wobei die Verwindungssteifigkeit der Brückenelemente (34A, 34B) um ihre Schwenkachse so an die elektrostatischen Kräfte zwischen den Elektroden (34; 38) anpassbar ist, dass eine Schwenkbewegung des Spiegelelements (36) mit gezielt einstellbarem Auslenkwinkel relativ zur Grundträgerfläche (31) durchführbar ist.

20. Vorrichtung nach dem vorstehenden Anspruch, wobei ein Spiegelelement (36) kardanisch gelagert ist durch ein weiteres Brückenelementpaar (84A, 84B), das innerhalb des nach dem vorstehenden Anspruch geschwenkten Bereichs vorgesehen ist.

21. Vorrichtung nach einem der beiden vorstehenden Ansprüche, wobei das Spiegelelement (36) so zur Schwenkachse orientiert ist, dass eine Schwenkachse das Spiegelelement (36) außermittig teilt.

22. Vorrichtung nach einem der vorstehenden Ansprüche, wobei das Spiegelelement (36) als Bragg-Filterelement ausgebildet ist und eine über die zwischen den Elektroden (34, 38) angelegte Steuerspannung spektral abstimmbare Filterfunktion besitzt.

23. Gebäudefenster enthaltend eine Vorrichtung nach einem der vorstehenden Ansprüche.

24. Gebäudefenster nach dem vorstehenden Anspruch, bei dem das Panel (15) zwischen zwei Fensterscheiben vorgesehen ist.

25. System zur Gestaltung von Gebäudefassaden, enthaltend ein oder mehrere Panels (15) nach einem der vorstehenden Ansprüche 1 bis 22, ein Steuergerät (18) zum Steuern der Auslenkung von Spiegelelementen (36) der Panels (15), sowie eine Einrichtung zum Übertragen von Steuersignalen oder elektrischen Steuergrößen an ein oder mehrere Panels (15).

26. Verwendung einer Vorrichtung nach einem der vorstehenden Ansprüche 1 bis 22, oder eines Systems nach dem vorstehenden Anspruch, oder eines Gebäudefensters nach Anspruch 23 oder 24 zur Gestaltung von Gebäudefassaden, einschließlich deren Fenstern.

27. Verwendung einer Vorrichtung nach einem der vorstehenden Ansprüche 1 bis 22 in einer Anlage zur Nutzung von Solarenergie, bei der das Panel (15) dazu verwendet wird, Solarstrahlung umzulenken oder zu bündeln.

28. Verwendung einer Vorrichtung nach einem der vorstehenden Ansprüche 1 bis 22 mit Lampen auf Reflektorbasis zur gezielten Lichtumlenkung oder /und Lichtbündelung, wobei das Panel (15) wenigstens einen Teil der Reflektorfläche bildet.

## Claims

1. Apparatus with mirror elements for light deflection on an entire area in the range of square decimetres or more, wherein
the apparatus forms a panel (15) which comprises a plurality of micromirror apparatuses (12) which themselves each contain a plurality of individual bodies (31) which are connected to a common base mounting surface (30), with one individual body (31) containing at least one holding element (32; 32A, 32B), which is positioned above the base mounting surface (30), for an optically reflectively acting mirror element (36) connected thereto, wherein the elements (32; 32A, 32B; 36) of the individual bodies are structure elements composed of layers from a thin-film production process, and wherein a conductive layer is provided as a common control electrode for movement of a group of mirror elements (36), and wherein the actuation mechanism is based on electrostatic forces.

2. Apparatus according to the preceding claim, wherein an electrically controllable actuating mechanism is provided for movement of the mirror elements (36).

3. Apparatus according to the preceding claim, furthermore containing
a device for application of a plurality of electrical control variables to respectively different, predetermined groups of physically adjacent mirror elements (36), in order to operate the actuating mechanism.

4. Apparatus according to the preceding claim, wherein at least one first electrode (34; 36) is associated with one mirror element, and at least one second electrode (38) is associated with the base mounting surface (30).

5. Apparatus according to Claim 3, wherein, for deliberate actuation of mirror elements (36), the device for application of a plurality of electrical control variables contains a device (16) for wire-free reception of a plurality of different control signals from a controller (18).

6. Apparatus according to Claim 1, wherein the plurality of micromirror apparatuses are subdivided into individual modules (12) which can each be individually connected to one another.

7. Apparatus according to Claim 1, wherein the mirror elements (36) are in the form of a reflective metal layer or a dielectric multiple layer with an electrically conductive individual layer, or of a reflected polymer layer with a conductive individual layer.

8. Apparatus according to Claim 6, wherein the apparatus contains connecting elements (22, 24) to which individual modules (12) of the same type can be connected at the edge.

9. Apparatus according to the preceding claim, wherein the apparatus contains plug-in connecting elements (22, 24), and wherein in addition to the mechanical connection, the connecting elements also contain an electrical plug connection between apparatuses of the same type.

10. Apparatus according to one of the preceding Claims 3 to 9, wherein the predefined electrical control variable can be predetermined for in each case one micromirror apparatus (12).

11. Apparatus according to Claim 1, wherein the mirror elements (36) are either
a) flat, or
b) they have a curved shape.

12. Apparatus according to Claim 1, wherein a holding element (32; 32A, 32B) and a mirror element (36) are manufactured integrally.

13. Apparatus according to Claim 1 and 11 alternative a), wherein the mirror elements (36) are rectangular.

14. Apparatus according to one of the preceding claims, wherein the mirror elements (36) are arranged in a regular matrix shape composed of parallel rows and parallel columns.

15. Apparatus according to Claim 1, wherein one mirror element (36) is in the form of a structure element of a metal layer or a dielectric multiple layer with a conductive individual layer, or a conductive polymer layer with reflective characteristics, and wherein, by itself having a predetermined amount of inflexibility, or by virtue of the inflexibility of its connection to the holding element, the mirror element is mounted such that it can move relative to the base mounting surface for an actuation mechanism which acts on the mirror element.

16. Apparatus according to the preceding claim, wherein a flat opposing electrode (38), which is shared by a plurality of or all of the mirror elements (36), is provided on the base mounting surface (30), and an electrical supply line (26, 28) is provided which leads to an outer edge of the apparatus, and contact is provided with the electrodes of groups of individual bodies by means of planar lines, for computer-controlled, group-by-group addressing and actuation of the individual body movement via the electrode pairs (34, 38).

17. Apparatus according to Claim 6 and the preceding claim, wherein a flat opposing electrode (38) which is shared by a plurality of or all of the mirror elements (36) is provided on the base mounting surface (30) and an electrical supply line (26, 28) is provided which leads to an outer edge of one individual module (12), and contact is provided with the electrodes of groups of individual bodies by means of planar lines, for computer-controlled, group-by-group addressing and actuation of the individual body movement via the electrode pairs (34, 38).

18. Apparatus according to Claim 1, wherein one mirror element (36) is connected to the holding element (32; 32A, 32B) via at least one bridging element (34) with a predetermined amount of inflexibility.

19. Apparatus according to Claim 1, wherein the mirror element (36) is attached to two bridging elements (34A, 34B) which, running in a parallel direction, form a pivoting axis for the area of the mirror element (36) and rest on opposite sides of the mirror element, and wherein the torsional stiffness of the bridging elements (34A; 34B) about their pivoting axis can be matched to the electrostatic forces between the electrodes (34; 38) such that the mirror element (36) can carry out a pivoting movement with a specifically adjustable deflection angle relative to the base mounting surface (31).

20. Apparatus according to the preceding claim, wherein one mirror element (36) is mounted on a universal joint by means of a further bridging element pair (84A, 84B) which are provided within the pivoting range according to the preceding claim.

21. Apparatus according to one of the two preceding claims, wherein the mirror element (36) is oriented with respect to the pivoting axis such that a pivoting axis splits the mirror element (36) eccentrically.

22. Apparatus according to one of the preceding claims, wherein the mirror element (36) is in the form of a Bragg filter element and has a filter function which can be spectrally tuned by means of the control voltage applied between the electrodes (34, 38).

23. Building window containing an apparatus according to one of the preceding claims.

24. Building window according to the preceding claim, in which the panel (15) is provided between two window panes.

25. System for configuration of building facades, containing one or more panels (15) according to one of the preceding Claims 1 to 22, a controller (18) for controlling the deflection of mirror elements (36) of the panels (15), and a device for transmission of control signals or electrical control variables to one or more panels (15).

26. Use of an apparatus according to one of the preceding Claims 1 to 22, or of a system according to the preceding claim, or of a building window according to Claim 23 or 24 for configuration of building facades, including their windows.

27. Use of an apparatus according to one of the preceding Claims 1 to 22 in an installation for use of solar energy, in which the panel (15) is used to deflect or to focus solar radiation.

28. Use of an apparatus according to one of the preceding Claims 1 to 22 with lamps on a reflector base for deliberates light deflection and/or light focusing, with the panel (15) forming at least one part of the reflector surface.

## Revendications

1. Dispositif comprenant des éléments miroirs destinés à dévier la lumière sur une surface totale dans la gamme des décimètres carrés ou plus, le dispositif formant un panneau (15) qui comprend une pluralité de dispositifs à micromiroir (12), lesquels incluent de leur côté une pluralité correspondante de corps individuels (31) reliés avec une surface porteuse de base commune (30), un corps individuel (31) contenant au moins un élément de maintien (32 ; 32A, 32B) dressé au-dessus de la surface porteuse de base (30) pour un élément miroir (36) à effet de réflexion optique lié à celle-ci, les éléments (32 ; 32A, 32B ; 36) des corps individuels étant des éléments structurels constitués de couches d'un processus de fabrication à couche mince et une couche conductrice étant prévue comme électrode de commande commune pour un mouvement d'un groupe d'éléments miroirs (36), le mécanisme d'actionnement étant basé sur des forces électrostatiques.

2. Dispositif selon la revendication précédente, un mécanisme d'actionnement à commande électrique étant prévu pour le mouvement des éléments miroirs (36).

3. Dispositif selon la revendication précédente, comprenant en plus un dispositif pour appliquer une pluralité de grandeurs de commande électriques à chaque fois à des groupes prédéfinis différents d'éléments miroirs (36) voisins dans l'espace afin de commander le mécanisme d'actionnement.

4. Dispositif selon la revendication précédente, au moins une première électrode (34 ; 36) étant associée à un élément miroir et au moins une deuxième électrode (38) à la surface porteuse de base (30).

5. Dispositif selon la revendication 3, le dispositif destiné à appliquer une pluralité de grandeurs de commande électriques en vue d'un actionnement ciblé des éléments miroirs (36) comprenant un dispositif (16) de réception sans fil d'une pluralité de signaux de commande différents provenant d'un appareil de commande (18).

6. Dispositif selon la revendication 1, la pluralité de dispositifs à micromiroir étant partagée en modules individuels (12) pouvant respectivement être reliés individuellement entre eux.

7. Dispositif selon la revendication 1, les éléments miroirs (36) étant réalisés sous la forme d'une couche métallique réfléchissante ou sous la forme d'une couche multiple diélectrique avec une couche individuelle électriquement conductrice ou encore sous la forme d'une couche polymère réfléchissante comportant une couche individuelle conductrice.

8. Dispositif selon la revendication 6, celui-ci comprenant des éléments de liaison (22, 24) avec lesquels les modules individuels (12) du même type peuvent être reliés au niveau du bord.

9. Dispositif selon la revendication précédente, celui-ci comprenant des éléments de liaison (22, 24) enfichables, les éléments de liaison, en plus de la liaison mécanique, contenant également une liaison électrique par enfichage entre des dispositifs de même type.

10. Dispositif selon l'une des revendications précédentes 3 à 9, la grandeur de commande électrique prédéfinie pouvant être prédéfinie à chaque fois pour un dispositif à micromiroir (12).

11. Dispositif selon la revendication 1, les éléments miroirs (36) a) soit étant de forme plane, b) soit présentant une forme courbe.

12. Dispositif selon la revendication 1, un élément de maintien (32 ; 32A, 32B) et un élément miroir (36) étant fabriqués d'une seule pièce.

13. Dispositif selon les revendications 1 et 11, variante a), les éléments miroirs (36) étant de forme rectangulaire.

14. Dispositif selon l'une des revendications précédentes, les éléments miroirs (36) étant disposés selon la forme d'une matrice régulière en lignes parallèles et en colonnes parallèles.

15. Dispositif selon la revendication 1, un élément miroir (36) étant réalisé sous la forme d'un élément structurel d'une couche métallique ou d'une couche multiple diélectrique avec une couche individuelle conductrice ou encore sous la forme d'une couche polymère conductrice ayant des propriétés réfléchissantes et l'élément miroir (36), du fait d'une rigidité flexionnelle prédéfinie intrinsèque ou de la rigidité flexionnelle de sa liaison avec l'élément de maintien, étant logé de manière à être mobile par rapport à la surface porteuse de base pour un mécanisme d'actionnement qui agit sur l'élément miroir.

16. Dispositif selon la revendication précédente, une contre-électrode (38) de forme plane commune à plusieurs ou à tous les éléments miroirs (36) étant présente sur la surface porteuse de base (30) et un câble d'arrivée (26, 28) électrique menant vers un bord extérieur du dispositif ainsi que la mise en contact des électrodes des groupes de corps individuels au moyen de câbles plats étant prévus en vue d'un adressage et d'un actionnement groupe par groupe commandés par ordinateur du mouvement des corps individuels par le biais des paires d'électrodes (34, 38).

17. Dispositif selon la revendication 6 et la revendication précédente, une contre-électrode (38) de forme plane commune à plusieurs ou à tous les éléments miroirs (36) étant présente sur la surface porteuse de base (30) et un câble d'arrivée (26, 28) électrique menant vers un bord extérieur d'un module individuel (12) ainsi que la mise en contact des électrodes des groupes de corps individuels au moyen de câbles plats étant prévus en vue d'un adressage et d'un actionnement groupe par groupe commandés par ordinateur du mouvement des corps individuels par le biais des paires d'électrodes (34, 38).

18. Dispositif selon la revendication 1, un élément miroir (36) étant relié avec l'élément de maintien (32 ; 32A, 32B) par le biais d'au moins un élément cavalier (34) ayant une rigidité flexionnelle prédéfinie.

19. Dispositif selon la revendication 1, l'élément miroir (36) étant fixé à deux éléments cavaliers (34A, 34B) qui, en s'étendant dans une direction parallèle, forment un axe de pivotement pour la zone de l'élément miroir (36) et reposent sur des côtés opposés de l'élément miroir et la rigidité à la torsion des éléments cavaliers (34A, 34B) autour de leur axe de pivotement pouvant être adaptée aux forces électrostatiques entre les électrodes (34 ; 38) de manière à pouvoir effectuer un mouvement de pivotement de l'élément miroir (36) avec un angle de déviation réglable de manière ciblée par rapport à la surface porteuse de base (31).

20. Dispositif selon la revendication précédente, un élément miroir (36) étant monté à la cardan par une paire d'éléments cavaliers (84A, 84B) supplémentaire qui est prévue dans la zone pivotée selon la revendication précédente.

21. Dispositif selon l'une des revendications précédentes, l'élément miroir (36) étant orienté par rapport à l'axe de pivotement de telle sorte qu'un axe de pivotement divise l'élément miroir (36) de manière excentrée.

22. Dispositif selon l'une des revendications précédentes, l'élément miroir (36) étant réalisé sous la forme d'un élément filtrant de Bragg et possédant une fonction de filtrage dont le spectre peut être accordé par le biais de la tension de commande appliquée entre les électrodes (34, 38).

23. Fenêtre de bâtiment contenant un dispositif selon l'une des revendications précédentes.

24. Fenêtre de bâtiment selon la revendication précédente, avec laquelle le panneau (15) est prévu entre deux vitres de fenêtre.

25. Système d'agencement de façades de bâtiment comprenant un ou plusieurs panneaux (15) selon l'une des revendications précédentes 1 à 22, un appareil de commande (18) pour commander la déviation des éléments miroirs (36) du panneau (15) ainsi qu'un dispositif pour transmettre des signaux de commande ou des grandeurs électriques de commande à un ou plusieurs panneaux (15).

26. Utilisation d'un dispositif selon l'une des revendications précédentes 1 à 22 ou d'un système selon la revendication précédente ou d'une fenêtre de bâtiment selon la revendication 23 ou 24 pour l'agencement de façades de bâtiment, y compris de leurs fenêtres.

27. Utilisation d'un dispositif selon l'une des revendications précédentes 1 à 22 dans une installation en vue de l'utilisation de l'énergie solaire, avec lequel le panneau (15) est utilisé pour dévier ou concentrer le rayonnement solaire.

28. Utilisation d'un dispositif selon l'une des revendications précédentes 1 à 22 avec des lampes sur une base réfléchissante pour la déviation et/ou la concentration ciblée de la lumière, le panneau (15) formant au moins une partie de la surface réfléchissante.
